(19) Europäisches Patentamt
European Patent Office
Office européen des brevets

(11) EP 3 440 517 B1

(12) EUROPÄISCHE PATENTSCHRIFT

(45) Veröffentlichungstag und Bekanntmachung des Hinweises auf die Patenterteilung:
**11.01.2023 Patentblatt 2023/02**

(21) Anmeldenummer: **17713207.3**

(22) Anmeldetag: **20.03.2017**

(51) Internationale Patentklassifikation (IPC):
***G05B 9/02*** *(2006.01)* ***G05B 19/042*** *(2006.01)*

(52) Gemeinsame Patentklassifikation (CPC):
**G05B 19/0428; G05B 9/02**

(86) Internationale Anmeldenummer:
**PCT/EP2017/056553**

(87) Internationale Veröffentlichungsnummer:
**WO 2017/174338 (12.10.2017 Gazette 2017/41)**

# (54) BUSTEILNEHMER UND VERFAHREN ZUM BETREIBEN EINES BUSTEILNEHMERS

BUS SUBSCRIBER AND METHOD FOR OPERATING A BUS SUBSCRIBER

ÉLÉMENT DE BUS ET PROCÉDÉ DE FONCTIONNEMENT D'UN ÉLÉMENT DE BUS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.04.2016 DE 102016106531**

(43) Veröffentlichungstag der Anmeldung:
**13.02.2019 Patentblatt 2019/07**

(73) Patentinhaber: **Eaton Intelligent Power Limited Corporation**
**Dublin 4 (IE)**

(72) Erfinder:
- **CULCA, Horea, Stefan**
  **53797 Lohmar (DE)**
- **BOECKER, Olaf**
  **53347 Alfter (DE)**

(74) Vertreter: **Eaton IP Group EMEA**
**c/o Eaton Intellectual Power Limited**
**Eaton House**
**30 Pembroke Road**
**Dublin 4 (IE)**

(56) Entgegenhaltungen:
**EP-A1- 2 720 051**
**WO-A2-2008/037495**
**JP-A- 2001 159 651**
**US-A1- 2011 128 046**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 440 517 B1

## Beschreibung

Die Erfindung betrifft einen Busteilnehmer und ein Verfahren zum Betreiben eines Busteilnehmers.

Ein Bus mit Busteilnehmern kann in der Automatisierungstechnik zur Steuerung und Regelung von Geräten und Anlagen eingesetzt werden. Ein Busteilnehmer kann als Master oder Slave realisiert sein. Der Busteilnehmer kann Teil eines Sicherheitsgerätes sein.

Sicherheitsgeräte aus dem Bereich der funktionalen Sicherheit etwa gemäß der Maschinenrichtlinie weisen in der Regel einen "sicheren Zustand" auf, also einen Zustand der Maschine, der keine Gefahr für Menschen und Anlagen darstellt. Der "sichere Zustand" ist häufig der "stromlose" Zustand. In diesem können etwa alle Sicherheitsausgänge der Sicherheitssteuerung ausgeschaltet sein.

Eine solche Sicherheitssteuerung, die für höhere Sicherheitskategorien bzw. Safety Integrity Levels, abgekürzt SIL, ausgelegt ist, ist redundant aufgebaut und umfasst häufig eine Zentraleinheit, die zwei Logikeinheiten beinhaltet, und zweikanalige Eingänge und Ausgänge. Die Logikeinheiten überwachen sich gegenseitig und auch die redundanten Ein- und Ausgänge, wobei jede Logikeinheit die Möglichkeit hat, beim Entdecken eines Fehlers das Gerät in den sicheren Zustand zu bringen. Die Logikeinheiten können z.B. als Mikroprozessoren oder Mikrocontroller realisiert sein.

Besonders sind dabei die so genannten Fehler gemeinsamer Ursache zu betrachten, englisch Common Cause Fault, kurz CCF. Ein Beispiel dafür ist eine gemeinsame Spannungsversorgung für beide Kanäle, etwa beide Logikeinheiten. Driftet die Versorgungsspannung beider Logikeinheiten auf einen Wert außerhalb des zulässigen Bereichs (Überspannung oder Unterspannung), so kann man nicht mehr damit rechnen, dass mindestens einer der Logikeinheiten Fehler zuverlässig erkennt und das Gerät in den sicheren Zustand bringt.

In diesem Fall kann, wie etwa in Dokument EP 2117094 A2 angegeben, eine zusätzliche Hardwareschaltung zur Überwachung der Versorgungsspannung implementiert werden, die unabhängig von einem Mikrocontroller im entsprechenden Fehlerfall einen Ausgangstreiber abschaltet und so das Gerät in den sicheren Zustand bringt. Das ist in einem kompakten Sicherheitsgerät mit lokalen sicheren Ausgängen mit wenig Aufwand zu realisieren.

In einem sicherheitsgerichteten System mit über einem Kommunikationsbus verteilten Sicherheitsmodulen hat jedoch z.B. eine Zentraleinheit keinen direkten Zugriff auf über den Bus gekoppelte Ausgangsmodule, so dass eine in der Zentraleinheit implementierte Schaltung diese Ausgänge nicht direkt, von den Logikeinheiten unabhängig, abschalten kann.

Dokument US 2011/0128046 A1 befasst sich mit einem Überwachungssystem. Dabei umfasst ein Ausgangsmodul eine Buskopplung, eine Mikrocontrollerschaltung, ein Durchkontaktierungsbauteil und eine Endstufe. Die Buskopplung weist einen Bustreiber auf, an den auf der einen Seite ein Bus angeschlossen ist und der auf der anderen Seite einen ersten und einen zweiten Anschluss aufweist. Die Endstufe weist ein Relais auf.

Das Durchkontaktierungsbauteil umfasst einen Eingangswiderstand, einen ersten und einen dritten Transistor und ein Flip-Flop. Der erste Anschluss des Bustreibers ist über den Eingangswiderstand an einen Steueranschluss des ersten Transistors angeschlossen. Ein Kollektoranschluss des ersten Transistors ist an einen Takteingang des Flip-Flops angeschlossen. Ein Ausgang des Flip-Flops ist über den dritten Transistor mit einem Ausgang des Durchkontaktierungsbauteils gekoppelt, der beispielsweise an einen Spannungsversorgungseingang des Relais der Endstufe angeschlossen ist. Folglich ist das Durchkontaktierungsbauteil eingangsseitig an den ersten Anschluss der Buskopplung und ausgangsseitig an das Relais angeschlossen.

Der erste und der zweite Anschluss des Bustreibers sind an einen Mikrocontroller der Mikrocontrollerschaltung angeschlossen. Ausgangsseitig ist der Mikrocontroller über einen vierten Transistor der Mikrocontrollerschaltung und einen Datenpfad mit dem Relais verbunden. Ein Widerstand, der einen Anschluss des vierten Transistors mit einem Eingang des Mikrocontrollers verbindet, wird zum Überwachen der Endstufe verwendet. Ein Überwachungsmodul ist geeignet, den Mikrocontroller und seinen Ausgang zu prüfen. Wenn eine Abweichung festgestellt wird, schaltet das Überwachungsmodul das System in einen sicheren Zustand, wobei es einen mittels des Durchkontaktierungsbauteils implementierten Sicherheitsmechanismus verwendet. In dieser Art und Weise wird die Spannungsversorgung für die Endstufe ausgeschaltet.

Dokument EP 2720051 A1 beschreibt ein Sicherheitssystem, das eine Sicherheitssteuerung, eine Busleitung und mehrere Sicherheitsteilnehmer umfasst, die über die Busleitung mit der Sicherheitssteuerung verbunden sind. Die Sicherheitsteilnehmer umfassen jeweils ein Schutzgerät und ein Anschaltungsmodul, welches mit dem jeweiligen Schutzgerät verbunden ist. Die Busleitung und die angeschlossenen Sicherheitsteilnehmer bilden einen einkanaligen, ringförmigen Testsignalpfad, der einen Ausgang der Sicherheitssteuerung mit einem Sicherheitseingang der Sicherheitssteuerung verbindet. Jedes Schutzgerät umfasst zwei elektrische Schalter, wobei es sich beispielsweise um Notaustaster handeln kann.

In einem Sicherheitsteilnehmer ist ein Testsignaleingang über einen Invertierer mit einem Steuereingang einer gesteuerten Stromquelle verbunden. Die Stromquelle wandelt das vom Invertierer gelieferte Gleichspannungssignal in ein Gleichstromsignal um, das über einen Hinleiter, den im sicheren Zustand des Schutzgeräts geschlossenen Schalter und einen Rückleiter einem Stromflusselement zugeführt wird, welches das Stromsignal in ein Gleichspannungssignal wandelt.

Aufgabe ist es, einen Busteilnehmer und ein Verfahren zum Betreiben eines Busteilnehmers bereitzustellen, bei denen die Sicherheit erhöht ist.

Diese Aufgabe wird mit den Gegenständen der unabhängigen Ansprüche gelöst. Weiterbildungen und Ausgestaltungen sind jeweils Gegenstand der abhängigen Ansprüche.

In der bevorzugten Ausführungsform umfasst ein Busteilnehmer eine erste und eine zweite Logikeinheit, eine erste Testleitung, eine Medienzugriffssteuerung, eine Uberwachungsschaltung und eine Übermittlungseinheit, wobei der Busanschluss über die Übermittlungseinheit mit der Medienzugriffssteuerung gekoppelt ist, und wobei die Medienzugriffssteuerung an den Bus angeschlossen ist. Der Busteilnehmer ist ausgelegt, dass in einer Kommunikationsphase die erste Logikeinheit über die Übermittlungseinheit mit einem Bus kommuniziert und dass die Überwachungsschaltung ein Überwachungssignal in einem Fehlerfall an die Übermittlungseinheit abgibt, sodass die Übermittlungseinheit die Kommunikation sperrt.

Mit Vorteil sind somit im Fehlerfall eine weitere Kommunikation und damit auch eine fehlerbehaftete Kommunikation verhindert. Im Fehlerfall können Nachrichten vom Busteilnehmer nicht an den Bus abgegeben werden.

Die erste Logikeinheit kann als Mikrocontroller, Mikroprozessor, anwendungsspezifische integrierte Schaltung (englisch application-specific integrated circuit, kurz ASIC), im Feld programmierbare Gatter-Anordnung (englisch field programmable gate array, kurz FPGA) oder endlicher Automat (englisch finite state machine) realisiert sein.

Die zweite Logikeinheit kann als Mikrocontroller, Mikroprozessor, anwendungsspezifische integrierte Schaltung (englisch application-specific integrated circuit, kurz ASIC), im Feld programmierbare Gatter-Anordnung (englisch field programmable gate array, kurz FPGA) oder endlicher Automat (englisch finite state machine) realisiert sein.

In einer Ausführungsform testet die erste und/oder die zweite Logikeinheit in einer Testphase, ob die Übermittlungseinheit das Überwachungssignal erhält.

In einer Ausführungsform testet die erste und/oder die zweite Logikeinheit in der Testphase, ob die Übermittlungseinheit nach Erhalt des Überwachungssignals die Kommunikation sperrt.

In einer Ausführungsform testet somit die erste und/oder die zweite Logikeinheit, ob die Überwachungsschaltung und die Übermittlungseinheit die Kommunikation im Fehlerfall sperren.

In einer Ausführungsform gibt die Überwachungsschaltung das Überwachungssignal bei einem Fehler aufgrund gemeinsamer Ursachen oder einem Ausfall aufgrund gemeinsamer Ursachen ab. Die Überwachungsschaltung kann das Überwachungssignal auch bei einem drohenden Fehler aufgrund gemeinsamer Ursachen oder einem drohenden Ausfall aufgrund gemeinsamer Ursachen abgeben. Der Busteilnehmer kann ausgelegt sein, Maßnahmen zur Beherrschung von Fehlern aufgrund gemeinsamer Ursache und/oder von Ausfällen aufgrund gemeinsamer Ursache durchzuführen.

In einer Ausführungsform werden als Ausfälle aufgrund gemeinsamer Ursache Ausfälle von mehreren Komponenten wie etwa der ersten und der zweiten Logikeinheit bezeichnet, die als Folge einer einzelnen Fehlerursache oder eines einzelnen Ereignisses auftreten. Der oder die Ausfälle können zum Beispiel aufgrund einer gemeinsamen äußeren Ursache, aufgrund funktionaler Abhängigkeiten der Komponenten oder aufgrund einer den Komponenten innewohnenden, gemeinsamen Ursache auftreten. Die gemeinsame äußere Ursache kann beispielsweise ein Spannungsabfall einer Versorgungsspannung, eine Überspannung oder eine Umgebungsbedingung wie z.B. Feuchtigkeit, Vibration oder Temperatur außerhalb eines vorgegebenen Bereichs sein, die mehrere Komponenten ausfallen lassen. Entsprechend wird die Überwachungsschaltung oder werden geeignete Überwachungsschaltungen implementiert.

Der Busteilnehmer kann als Master oder Slave realisiert sein.

In einer Ausführungsform generiert die Überwachungsschaltung das Überwachungssignal, wenn sich eine Versorgungsspannung der ersten und der zweiten Logikeinheit außerhalb eines vorgegebenen Bereichs befindet.

In einer Ausführungsform ist die Überwachungsschaltung über eine Steuerleitung mit der Übermittlungseinheit gekoppelt. Die Überwachungsschaltung gibt das Überwachungssignal über die Steuerleitung an die Übermittlungseinheit ab.

In einer Ausführungsform umfasst die Übermittlungseinheit eine Schalteranordnung, die steuerseitig an die Steuerleitung angeschlossen ist. Das Überwachungssignal wird der Schalteranordnung zugeleitet.

Gemäß der Erfindung ist ein Busanschluss der ersten Logikeinheit über die Ubermittlungseinheit mit dem Bus gekoppelt. Die erste Logikeinheit generiert gemäß einer Ausführungsform ein Anschlusssignal und gibt dieses über den Busanschluss an die Übermittlungseinheit ab.

Erfindungsgemäß ist die erste und/oder die zweite Logikeinheit über eine erste Testleitung des Busteilnehmers mit der Überwachungsschaltung gekoppelt. Die erste und/oder die zweite Logikeinheit gibt ein erstes Testsignal über die erste Testleitung an die Überwachungsschaltung ab.

In einer Ausführungsform ist die Übermittlungseinheit über eine Rückkopplungsleitung des Busteilnehmers mit einem Signaleingang der ersten und/oder der zweiten Logikeinheit gekoppelt. Die Übermittlungseinheit stellt ein Prüfsignal der ersten und/oder der zweiten Logikeinheit über die Rückkopplungsleitung bereit.

Eine weitere Ausführungsform umfasst ein Verfahren zum Betreiben eines Busteilnehmers ein Kommunizieren einer ersten Logikeinheit in einer Kommunikationsphase über eine Übermittlungseinheit mit einem Bus und im Fehlerfall ein Abgeben eines Überwachungssignals von einer Überwachungsschaltung an die Übermittlungseinheit derart, dass die Übermittlungseinheit die Kommunikation sperrt. Der Busteilnehmer umfasst die erste Logikeinheit, eine erste Testleitung, eine Medienzugriffssteuerung, die Überwachungsschaltung und die Übermittlungseinheit, wobei der Busanschluss über die Übermittlungseinheit mit der Medienzugriffssteuerung gekoppelt ist, und wobei die Medienzugriffssteuerung an den Bus angeschlossen ist.

Der Busteilnehmer umfasst eine zweite Logikeinheit.

Der Busteilnehmer führt ein Verfahren zum Erreichen einer sicheren Kommunikationsunterbrechung durch und unterstützt somit die funktionale Sicherheit. Der Busteilnehmer kann als Sicherheitsbaugruppe, Zentraleinheit, sicherheitsgerichtete Ausgangsbaugruppe, Sicherheits-Busmodul oder intelligente Eingangs-/Ausgangs-Baugruppe, abgekürzt IO-Baugruppe, implementiert werden.

Der Busteilnehmer ist zweikanalig aufgebaut und mit zwei Logikeinheiten realisiert. Eine Baugruppe, die über einen Bus kommuniziert, beinhaltet einen Busspezifischen Kommunikationsbaustein (manchmal als Media Access Controller, kurz MAC bezeichnet) und eventuell eine Busanschaltung, die eine physikalische Buskopplung (Bustreiber, Bustransceiver, Kopplungs-Transformator oder ähnliches - manchmal als PHY bezeichnet), und/oder einen Kommunikationscontroller beinhalten kann. Einige dieser Elemente können in der Logikeinheit integriert sein.

Die Schnittstelle zwischen Logikeinheit und MAC/Kommunikationscontroller kann parallel (Adressen/Daten-Bus) oder seriell (z.B. ein Serial Peripheral Interface, kurz SPI, oder ein Universal Asynchronous Receiver Transmitter, kurz UART) sein, soweit der MAC nicht in der Logikeinheit integriert ist.

In einer Ausführungsform ist der Busteilnehmer derart realisiert, dass er an einer geeigneten Stelle die Kommunikation zwischen Logikeinheit und Bus sicher unterbricht, um die Übertragung verfälschter Daten zu unterbinden. Der Busteilnehmer weist dazu geeignete Bausteine zur Kommunikationsunterbrechung auf. Mit Vorteil kann der Busteilnehmer diese Bausteine zur Kommunikationsunterbrechung zyklisch auf Wirksamkeit prüfen. Dadurch wird die Schaltung "sicher". Mit Vorteil wird durch die Prüfung die normale Funktion des Busteilnehmers nicht gestört. Mit Vorteil können auch allgemeine lokale Fehler im Busteilnehmer erkannt werden. Dabei wird ein allgemeiner Fehler in der Regel von den Logikeinheiten erkannt, solange mindestens eine Logikeinheit einwandfrei arbeitet. Erst ein CCF, der beide Logikeinheiten beeinflusst, ist von der Überwachungseinheit zu detektieren. Die Unterbrechung der Kommunikation zur Zentraleinheit unterbindet die Übertragung verfälschter sicherheitsrelevanter Daten vom Busteilnehmer an die Zentraleinheit beziehungsweise von der Zentraleinheit zu einem Busteilnehmer (z.B. über sichere Ausgänge). Der Busteilnehmer kann als Zentraleinheit realisiert sein.

Die Erfindung wird im Folgenden an mehreren Ausführungsbeispielen anhand der Figuren näher erläutert. Funktions- beziehungsweise wirkungsgleiche Komponenten oder Funktionseinheiten tragen gleiche Bezugszeichen. Insoweit sich Komponenten oder Funktionseinheiten in ihrer Funktion entsprechen, wird deren Beschreibung nicht in jeder der folgenden Figuren wiederholt. Es zeigen:

| | |
|---|---|
| Figuren 1 bis 3 | beispielhafte Ausführungsformen eines Busteilnehmers, |
| Figur 4 | eine beispielhafte Ausführungsform einer Überwachungsschaltung, |
| Figur 5 | eine weitere beispielhafte Ausführungsform eines Busteilnehmers und |
| Figur 6 | eine weitere beispielhafte Ausführungsform einer Überwachungsschaltung. |

Figur 1 beschreibt eine beispielhafte Ausführungsform eines Busteilnehmers 10, der eine erste Logikeinheit 11, eine zweite Logikeinheit 12, eine Überwachungsschaltung 13 und eine Übermittlungseinheit 14 umfasst. Weiter umfasst der Busteilnehmer 10 einen Versorgungsspannungsanschluss 15, an den die erste und die zweite Logikeinheit 11, 12 und die Überwachungsschaltung 13 angeschlossen sind. Die erste und die zweite Logikeinheit 11, 12 sind bidirektional miteinander verbunden. Die erste Logikeinheit 11 kann als Mikrocontroller, Mikroprozessor, ASIC, FPGA, endlicher Automat oder Wachhund realisiert sein. Die zweite Logikeinheit 12 kann ebenfalls als Mikrocontroller, Mikroprozessor, ASIC, FPGA, endlicher Automat oder Wachhund realisiert sein. Ein Ausgang der zweiten Logikeinheit 12 ist über eine erste Testleitung 16 mit einem ersten Steuereingang der Überwachungsschaltung 13 verbunden. Die zweite Logikeinheit 12 kann auch über eine zweite Testleitung 17 mit einem zweiten Steuereingang der Überwachungsschaltung 13 verbunden sein. Die Überwachungsschaltung 13 kann an einen weiteren Versorgungsspannungsanschluss 18 angeschlossen sein.

Die erste Logikeinheit 11 umfasst einen Busanschluss 20, der über die Übermittlungseinheit 14 mit einem Bus 21 gekoppelt ist. Weiter weist der Busteilnehmer 10 eine Medienzugriffssteuerung 22, englisch Media Access Controller, abgekürzt MAC, auf. Der Busanschluss 20 ist über die Übermittlungseinheit 14 mit dem MAC 22 gekoppelt. Der MAC 22 ist, gegebenenfalls über einen weiteren, nicht gezeigten Bustreiber, an den Bus

21 angeschlossen. Die Übermittlungseinheit 14 umfasst eine Logikschaltung 23, die eingangsseitig an den Busanschluss 20 angeschlossen ist. Ein Ausgang der Logikschaltung 23 ist mit dem MAC 22 gekoppelt. Die Überwachungsschaltung 13 umfasst einen Steuerausgang 24, der über eine Steuerleitung 25 mit der Übermittlungseinheit 14 verbunden ist. Somit ist der Steuerausgang 24 der Überwachungsschaltung 13 an einen Steuereingang der Logikschaltung 23 angeschlossen.

Der Ausgang der Logikschaltung 23 ist über eine Rückkopplungsleitung 27 an einen Signaleingang 26 der zweiten Logikeinheit 12 angeschlossen. Weiter kann der Ausgang der Logikschaltung 23 über die Rückkopplungsleitung 27 auch an einen Signaleingang 28 der ersten Logikeinheit 11 angeschlossen sein. Die erste Logikeinheit 11 kann mindestens einen weiteren Busanschluss 30 aufweisen, der über eine Busleitung 31 mit dem MAC 22 verbunden ist. Der Busteilnehmer 10 kann als Master realisiert sein.

Am Versorgungsspannungsanschluss 15 liegt eine Versorgungsspannung VDD an. Die Versorgungsspannung VDD wird sowohl der ersten und der zweiten Logikeinheit 11, 12 wie auch der Überwachungsschaltung 13 zugeführt. Die Überwachungsschaltung 13 kann als Spannungsüberwachungsschaltung realisiert sein. Die Überwachungsschaltung 13 überwacht, ob sich die Versorgungsspannung VDD in einem vorgegebenen Bereich befindet. Die Überwachungsschaltung 13 überwacht, ob sich die Versorgungsspannung VDD in folgendem vorgegebenen Bereich befindet:

$$VMIN < VDD < VMAX$$

Dabei ist VMIN der Wert der minimal zulässigen Versorgungsspannung und VMAX der Wert der maximal zulässigen Versorgungsspannung. Die Überwachungsschaltung 13 wird mit einer weiteren Versorgungsspannung VS, die unabhängig von der Versorgungsspannung VDD ist, über den weiteren Versorgungsspannungsanschluss 18 versorgt. Die weiteren Versorgungsspannung VS kann z.B. 24 V betragen.

Liegt die aktuell anliegende Versorgungsspannung VDD nicht im vorgegebenen Bereich, so gibt die Überwachungsschaltung 13 an ihrem Steuerausgang 24 ein Überwachungssignal SU ab. Das Überwachungssignal SU wird über die Steuerleitung 25 der Übermittlungseinheit 14 zugeleitet. Somit wird das Überwachungssignal SU der Logikschaltung 23 zugeführt. Die erste Logikeinheit 11 gibt an ihrem Busanschluss 20 ein Anschlusssignal SWR ab, das der Übermittlungseinheit 14 und damit der Logikschaltung 23 zugeleitet wird. Die Übermittlungseinheit 14 bildet ein Bussignal WRS als Funktion des Anschlusssignals SWR und des Überwachungssignals SU. Das Bussignal WRS kann als WRsafe realisiert sein. Die Logikschaltung 23 gibt das Bussignal WRS in Abhängigkeit des Anschlusssignals SWR an ihrem Ausgang ab, sofern das Überwachungssignal SU signalisiert, dass kein Fehlerfall vorliegt. Signalisiert jedoch das Überwachungssignal SU das Vorliegen eines Fehlerfalles, so gibt die Logikschaltung 23 und somit die Übermittlungseinheit 14 kein Bussignal WRS beziehungsweise ein Bussignal WRS mit einem inaktiven Zustand oder einem inaktiven Pegel ab.

Das Überwachungssignal SU weist einen ersten logischen Wert im Fehlerfall und einen zweiten logischen Wert im Fall, dass kein Fehlerfall vorliegt, auf. Der erste logische Wert unterscheidet sich vom zweiten logischen Wert. Beispielsweise kann der erste logische Wert 0 und der zweite logische Wert 1 sein. Das Bussignal WRS wird somit durch logische Verknüpfung des Anschlusssignals SWR und des Überwachungssignals SU gebildet. Die Logikschaltung 23 kann beispielsweise eine UND-Funktion realisieren. Das Bussignal WRS kann dann als UND-Verknüpfung des Überwachungssignals SU und des Anschlusssignals SWR gebildet werden. Wird der Busteilnehmer 10, insbesondere die Überwachungsschaltung 13 und die Logikschaltung 23, als "positive Logik" realisiert, so weist der aktive Pegel der Signale wie etwa des Anschlusssignals SWR den Wert 1 und der inaktive Pegel den Wert 0 auf. Die Logikschaltung 23 kann als UND-Gatter realisiert sein.

In der Praxis sind häufig die Write-Signale invertiert. Der Busteilnehmer 10, insbesondere die Überwachungsschaltung 13 und die Logikschaltung 23, können als "negative Logik" realisiert sein. Der aktive Pegel der Signale wie etwa des Anschlusssignals SWR weist den Wert 0 und der inaktive Pegel den Wert 1 auf. Das Überwachungssignal SU weist den ersten logischen Wert im Fehlerfall mit dem Wert 1 und den zweiten logischen Wert mit dem Wert 0 im Fall, dass kein Fehlerfall vorliegt, auf. Die Logikschaltung 23 kann als ODER-Gatter realisiert sein.

Das Überwachungssignal SU ändert bei der "positiven" und der "negativen" Logik das Signal am Ausgang der Logikschaltung 23: Im Fehlerfall hat das Überwachungssignal SU den aktiven Pegel, das heißt den ersten logischen Wert, und sperrt somit die Übertragung über die Logikschaltung 23. Zur Realisierung der logischen Funktion kann die Logikschaltung 23 Logikgatter wie UND- oder ODER-Gatter aufweisen. Mit Vorteil ist die Kopplung der ersten Logikeinheit 11 mit dem MAC 22 unterbrochen, sobald die Überwachungsschaltung 13 einen Fehlerfall detektiert.

Dabei sind die Steuersignale typisch "aktivelow" (das heißt der Wert 0 entspricht einem aktiven Zustand oder Pegel und der Wert 1 entspricht einem inaktiven Zustand oder Pegel).

Die erste Logikeinheit 11 gibt über die Busleitung 31 ein Signal an den MAC 22 ab bzw. empfängt ein Signal vom MAC 22. Die Busleitung 31 kann als Adressen/DatenBus, kurz A/D-Bus, realisiert sein. Die Busleitung 31 kann mehrere Adressen- und Datenleitungen umfassen.

In einer Testphase gibt die zweite Logikeinheit 12 über die erste Testleitung 16 ein erstes Testsignal

ST1 an die Überwachungsschaltung 13 ab. Damit triggert die zweite Logikeinheit 12 einen ersten Test in der Überwachungsschaltung 13. Beim ersten Test wird beispielsweise das Verhalten des Busteilnehmers 10 im Falle eines Abfalls der Versorgungsspannung VDD unter die minimal zulässige Versorgungsspannung VMIN getestet. Löst die zweite Logikeinheit 12 über das erste Testsignal ST1 den Test des ersten Fehlerfalls aus, während die erste Logikeinheit 11 das Anschlusssignal SWR als "aktiv" schaltet, so gibt die Überwachungseinheit 13 das Überwachungssignal SU mit dem ersten logischen Wert ab. Die Übermittlungseinheit 14 sperrt somit die Übermittlung des Anschlusssignals SWR, sodass das Bussignal WRS inaktiv ist.

Über die Rückkopplungsleitung 27 wird ein Prüfsignal SP dem Signaleingang 26 der zweiten Logikeinheit 12 und dem Signaleingang 28 der ersten Logikeinheit 11 zugeleitet. Das Prüfsignal SP entspricht dem Bussignal WRS. Registriert die zweite Logikeinheit 12 nach Abgabe des ersten Testsignals ST1, dass das Bussignal WRS inaktiv ist, so ist der Test des ersten Fehlerfalles erfolgreich verlaufen. Die Überwachungsschaltung 13 und die Übermittlungseinheit 14 haben somit ordnungsgemäß beim Test des ersten Fehlerfalls funktioniert. Empfängt jedoch die zweite Logikeinheit 12 nach Abgabe des ersten Testsignals ST1 das Bussignal WRS als aktiv, so registriert die zweite Logikeinheit 12, dass der Test des ersten Fehlerfalls nicht erfolgreich verlaufen ist. Trotz vorliegenden simulierten ersten Fehlerfalls könnte die erste Logikeinheit 11 weiter über die Übermittlungseinheit 14 und den MAC 22 mit dem Bus 21 kommunizieren. Die erste und die zweite Logikeinheit 11, 12 können gemeinsam den Test überwachen.

In einem weiteren Abschnitt der Testphase kann die zweite Logikeinheit 12 über die zweite Testleitung 17 ein zweites Testsignal ST2 an die Überwachungsschaltung 13 abgeben. Somit kann die zweite Logikeinheit 12 einen zweiten Test in der Überwachungsschaltung 13 auslösen. Im zweiten Test kann beispielsweise das Verhalten des Busteilnehmers 10 für die Situation getestet werden, dass die Versorgungsspannung VDD die maximal zulässige Versorgungsspannung VMAX übersteigt. Der Ablauf nach Generierung des zweiten Testsignals ST2 entspricht dem Ablauf nach Erzeugung des ersten Testsignals ST1.

Die Buskommunikation erfolgt über den MAC-Baustein 22, der zu den Logikeinheiten 11, 12 (bzw. zur ersten Logikeinheit 11) über einen parallelen Adressen/Daten-Bus 31 mit Chip-Select, Read- und Write-Signalen gekoppelt ist (z.B. Profibus-ASIC, VPC3/SPC3 für Profibus-DP oder SWD-ASIC für EATONs SmartWire-DT). Der Busteilnehmer 10 kann etwa als "Zentraleinheit" realisiert sein, wie etwa eine CPU oder ein Gateway. Die Logikeinheiten 11, 12 besitzen die volle Kontrolle über die Datenübertragung zum MAC 22.

Gemäß Figur 1 treibt die erste Logikeinheit 11 den parallelen Bus 31, an dem der MAC-Baustein 22 angeschlossen ist. Das Anschlusssignal SWR, auch Write-Signal genannt, kann mittels der Logikschaltung 23 von der unabhängigen Überwachungsschaltung 13 gesperrt werden, so dass die erste Logikeinheit 11 keine Daten mehr zum Bus 21 schicken kann und eine Kommunikationsunterbrechung erzielt ist. Um die Schaltung sicher zu gestalten, wird diese Funktion periodisch getestet. In einer Kommunikationslücke - die erste Logikeinheit 11 kontrolliert die Datenübertragung - schaltet die erste Logikeinheit 11 den Busanschluss 20, auch Portpin genannt, mit dem Write-Signal SWR als Ausgangsport mit inaktivem Signalpegel um. Anschließend aktiviert die zweite Logikeinheit 12 eines der Testsignale ST1, ST2, das eine Unterschreitung bzw. Überschreitung der erlaubten Pegel für die gemeinsame Versorgungsspannung VDD der Logikeinheiten 11, 12 simuliert, so wie in Dokument EP 2117094 A2 beschrieben, worauf die Überwachungsschaltung 13 die Logikschaltung 23 sperrt. Das erste Testsignal ST1 kann als Test L und das zweite Testsignal ST2 als Test H bezeichnet werden. Nun schaltet die erste Logikeinheit 11 den Port 20 des Write-Signals SWR aktiv um und beide Logikeinheiten 11, 12 prüfen, dass der Ausgang der Logikschaltung 23 inaktiv bleibt. Dieser Ausgang wird zur Überprüfung zu den Logikeinheiten 11, 12 zurückgeführt. Nach erfolgreichem Test schaltet die erste Logikeinheit 11 den Busanschluss 20 des Anschlusssignals SWR inaktiv, dann deaktiviert die zweite Logikeinheit 12 das erste Testsignal ST1, die erste Logikeinheit 11 setzt wieder den Port 20 als Write-Signal SWR und die normale Kommunikation kann weiter stattfinden.

Abhängig vom Aufbau könne mehrere Anschlusssignale SWR, auch Write-Signale genannt, vorhanden sein, z.B. WR_H und WR_L für 16 Bit Busse. In diesem Fall werden Logikschaltungen 23 und Rückführungssignale für alle Anschlusssignale SWR vorgesehen.

Da der Busteilnehmer 10 zwei Logikeinheiten 11, 12 umfasst, können die Aufgaben des Busteilnehmers 10 auf die beiden Logikeinheiten 11, 12 verteilt werden. Wie in Figur 1 gezeigt, übernimmt z.B. die erste Logikeinheit 11 die Kommunikation und die zweite Logikeinheit 12 den oder die Tests. Die zwei Logikeinheiten 11, 12 können z.B. beide als Mikrocontroller realisiert sein. Ein Mikrocontroller kann z.B. einen Mikroprozessor und einen Speicher umfassen. Die Überwachungsschaltung 13 kann getrennt von der ersten und der zweiten Logikeinheit 11, 12 realisiert sein.

In einer alternativen, nicht gezeigten Ausführungsform ist die erste Logikeinheit 11 leistungsfähiger als die zweite Logikeinheit 12 und führt sowohl die Kommunikation wie auch den oder die Tests durch. Die zweite Logikeinheit 12 führt dann die redundant-notwendigen Aufgaben, insbesondere für die eigentliche Sicherheitsfunktion, durch. Die zweite Logikeinheit 12 versetzt den Busteilnehmer 10 in den sicheren Zustand. Die zwei Logikeinheiten 11, 12 können z.B. beide als Mikrocontroller realisiert sein, wobei die zweite Logikeinheit 12 "leistungsschwach" realisiert ist. Alternativ ist die erste Logikeinheit 11 als Mikrocontroller und die zweite Logikeinheit als ASIC, FPGA, endlicher Automat oder Wachhund implementiert.

In einer alternativen, nicht gezeigten Ausführungsform überwacht die Überwachungsschaltung 13 eine andere Art von Fehlern gemeinsamer Ursache.

Figur 2 zeigt eine weitere beispielhafte Ausführungsform des Busteilnehmers 10, die eine Weiterbildung der in Figur 1 gezeigten Ausführungsform ist. Die Übermittlungseinheit 14 umfasst ein Sendeelement 40, das eingangsseitig mit dem Busanschluss 20 der ersten Logikeinheit 11 gekoppelt ist. Ausgangsseitig ist das Sendeelement 40 mit dem MAC 22 gekoppelt. Weiter weist die Übermittlungseinheit 14 eine Schalteranordnung 41 auf, die steuerseitig an den Steuerausgang 24 der Überwachungsschaltung 13 angeschlossen ist. Ein Anschluss der Schalteranordnung 41 ist an einen Versorgungsanschluss des Sendeelements 40 angeschlossen. Ein weiterer Anschluss der Schalteranordnung 41 kann an den Versorgungsspannungsanschluss 15 angeschlossen sein.

Die Schalteranordnung 41 umfasst einen Schalter 42, dessen Steueranschluss mit dem Steuerausgang 24 der Überwachungsschaltung 13 verbunden ist. Somit koppelt der Schalter 42 den Versorgungsspannungsanschluss 15 mit dem Sendeelement 40. Ein Knoten zwischen dem Schalter 42 und dem Sendeelement 40 ist über die Rückkopplungsleitung 27 an den Signaleingang 26 der zweiten Logikeinheit 12 und an den Signaleingang 28 der ersten Logikeinheit 11 angeschlossen. Der MAC 22 kann über mindestens eine Signalleitung mit einem Buseingang 45 der ersten Logikeinheit 11 gekoppelt sein. Optional ist eine Entladungsschaltung oder ein Entladewiderstand 43 zwischen der Rückkopplungsleitung 27 und einem Bezugspotentialanschluss 44 angeordnet. Der Entladewiderstand 43 kann als Pull-down-Widerstand realisiert sein.

In der Kommunikationsphase gibt die erste Logikeinheit 11 das Anschlusssignal SWR an das Sendeelement 40 ab. Das Sendeelement 40 generiert das Bussignal WRS, auch Sendesignal TX genannt. Das Bussignal WRS wird dem MAC 22 zugeführt, der wiederum ein Signal an den Bus 21 abgibt. In der Kommunikationsphase empfängt der MAC 22 ein Signal vom Bus 21 und gibt ein Empfangssignal RX an den Buseingang 45 ab.

In der Kommunikationsphase ist der Schalter 42 leitend geschaltet, so dass die Versorgungsspannung VDD dem Versorgungseingang des Sendeelements 40 zugeleitet wird. Das Überwachungssignal SU setzt den Schalter 42 in der Kommunikationsphase in den leitenden Zustand.

Im Fehlerfall bildet die Überwachungsschaltung 13 das Überwachungssignal SU derart, dass der Schalter 42 in einen nicht-leitenden Zustand versetzt wird. Weist das Überwachungssignal den ersten logischen Wert auf, so ist somit der Schalter 42 nicht-leitend geschaltet, und weist das Überwachungssignal SU den zweiten logischen Wert auf, so ist der Schalter 42 leitend geschaltet.

In einer Testphase gibt die zweite Logikeinheit 12 das erste und/oder zweite Testsignal ST1, ST2 an die Überwachungsschaltung 13 ab, welche daraufhin das Überwachungssignal SU derart bereitstellt, dass der Schalter 42 nicht-leitend geschaltet ist. Somit wird das Sendeelement 40 nicht mehr von der Versorgungsspannung VDD versorgt und gibt somit kein Bussignal WRS, auch Sendesignal TX genannt, ab. Die am Versorgungsanschluss des Sendeelements 40 anliegende Spannung wird als Prüfsignal SP dem Signaleingang 26 der zweiten Logikeinheit 12 und dem Signaleingang 28 der ersten Logikeinheit 11 über die Rückkopplungsleitung 27 zugeleitet. Ein Abfall des Spannungswerts des Prüfsignals SP wird somit von der zweiten Logikeinheit 12 und/oder von der ersten Logikeinheit 11 registriert. Damit diese Spannung in kurzer Zeit abfällt, verbindet die Entladeschaltung oder der Entladewiderstand 43 die Rückkopplungsleitung 27 mit dem Bezugspotentialanschluss 44. Der Busteilnehmer 10 kann beispielsweise als Slave oder Master realisiert sein.

Die Buskommunikation erfolgt über den MAC-Baustein 22, der zur ersten Logikeinheit 11 über eine serielle Verbindung - z.B. UART - gekoppelt ist. Diese Schaltung ist z.B. in einem intelligenten Bus-Slave zu finden, wie z.B. einer IO-Baugruppe. Die Logikeinheiten 11, 12 besitzen die volle Kontrolle über die Datenübertragung zum MAC 22.

Auch in diesem Fall könnte die in Figur 1 gezeigte Logikschaltung 23 in ähnlicher Weise verwendet werden. Häufig weist der Busteilnehmer 10 jedoch ein Sendeelement 40 auf, da in der Regel eine galvanische Trennung an dieser Stelle vorteilhaft ist. Das Sendeelement 40 kann z.B. als Optokoppler realisiert sein. Der Sender, das heißt die Übermittlungseinheit 14, wird dadurch gesperrt, dass die Versorgungsspannung VDD mittels des Schalters 42 unterbrochen wird. Der Schalter 42 kann beispielsweise als MOS-Transistor implementiert werden. In ähnlicher Weise wie in Figur 1 aktivieren die Logikeinheiten 11, 12 in einer Kommunikationslücke die Überwachungsschaltung 13 und prüfen das Abschalten der Versorgungsspannung VDD des Sendeelements 40 durch ein Testverfahren.

Der Busteilnehmer 10 gemäß Figur 2 weist als Datenübertragungsart eine serielle Verbindung TX auf. Zur Realisierung der sicheren Datensperrung wird auf der Ebene einer (durch Optokoppler galvanisch getrennten) seriellen Kopplung (Signal TX) zwischen der ersten Logikeinheit 11 (als Mikrocontroller realisiert) und dem MAC 22 (ASIC) die Spannungsversorgung des als Optokoppler realisierten Sendeelements 40 getrennt.

Figur 3 zeigt eine weitere beispielhafte Ausführungsform des Busteilnehmers 10, die eine Weiterbildung der in den Figuren 1 und 2 gezeigten Ausführungsformen ist. Die erste Logikeinheit 11 umfasst den MAC 22. Die Übermittlungseinheit 14 umfasst eine Buskopplung 50. Die Buskopplung 50 kann auch als physikalische Buskopplung, abgekürzt PHY, realisiert sein. Die Buskopplung 50 kann beispielsweise als Bustreiber, Bustransceiver oder Kopplungstransformator implementiert sein. Die Buskopplung 50 ist über eine bidirektionale Verbindung 51 mit dem MAC 22 gekoppelt. Die bidirektionale Verbindung 51 kann mehrere Leitungen umfassen.

Weiter weist die Übermittlungseinheit 14 die Schalteranordnung 41 auf. Ein Anschluss der Schalteranordnung 41 ist an einen Versorgungsanschluss der Buskopplung 50 angeschlossen. Die Schalteranordnung 41 kann den Schalter 42 und einen weiteren Schalter 53 umfassen, die seriell zueinander geschaltet sind. Die Serienschaltung aus dem Schalter 42 und dem weiteren Schalter 53 koppelt den Versorgungsspannungsanschluss 15 mit dem Versorgungsanschluss der Buskopplung 50. Der Steuerausgang 24 der Überwachungsschaltung 13 ist über die Steuerleitung 25 an die Steueranschlüsse des Schalters 42 und des weiteren Schalters 53 angeschlossen. Ausgangsseitig ist die Schalteranordnung 41 über die Rückkopplungsleitung 27 mit dem Signaleingang 26 der zweiten Logikeinheit 12 und dem Signaleingang 28 der ersten Logikeinheit 11 verbunden. Die Buskopplung 50 ist am Bezugspotentialanschluss 44 angeschlossen. Ein Kondensator 55 koppelt den Versorgungsanschluss der Buskopplung 50 mit dem Bezugspotentialanschluss 44.

In der Kommunikationsphase sind der Schalter 42 und der weitere Schalter 53 leitend geschaltet. Somit wird die Versorgungsspannung VDD dem Versorgungsanschluss der Buskopplung 50 zugeleitet. Der Kondensator 55 wird auf die Versorgungsspannung VDD aufgeladen.

Im Fehlerfall schaltet das Überwachungssignal SU den Schalter 42 und den weiteren Schalter 53 nichtleitend. Die Buskopplung 50 wird vom Kondensator 55 versorgt.

Erst bei einer vorbestimmten Dauer der Spannungsunterbrechung sinkt die Spannung am Kondensator 55 und damit am Versorgungsanschluss der Buskopplung 50 derart ab, dass die Kommunikation über die Buskopplung 50 im Fehlerfall mit Vorteil unterbrochen wird.

In einer Testphase gibt die zweite Logikeinheit 12 das erste und/oder zweite Testsignal ST1, ST2 an die Überwachungsschaltung 13 ab, welche mittels des Überwachungssignals SU den Schalter 42 und den weiteren Schalter 53 nicht-leitend schaltet. In der Testphase wie auch im Fehlerfall nimmt die Spannung am Knoten zwischen dem Schalter 42 und dem weiteren Schalter 53 und damit die Spannung an der Rückkopplungsleitung 27 ab. Der Spannungsabfall wird von der zweiten und/oder ersten Logikeinheit 11, 12 registriert. Somit detektiert die erste und/oder zweite Logikeinheit 11, 12, ob die Abgabe des ersten und/oder zweiten Testsignals ST1, ST2 ordnungsgemäß zu einer Unterbrechung der Kopplung vom Versorgungsspannungsanschluss 15 zum Versorgungsanschluss der Buskopplung 50 führt.

Eine Zeitdauer, die für den Test benötigt ist, ist derart kurz, dass eine Leistungsversorgung der Buskopplung 50 über den Kondensator 55 realisiert wird. Die erste Logikeinheit 11 kann somit über den eingebauten MAC 22 und die Buskopplung 50 ordnungsgemäß mit dem Bus 21 kommunizieren, auch wenn sich der erste Teilnehmer 10 in der Testphase befindet. Die Dauer eines Tests kann z.B. in der Größenordnung von 10 $\mu$s sein. Erst im Fehlerfall wird die Kommunikation der ersten Logikeinheit 11 mit dem Bus 21 durch die Buskopplung 50 unterbrochen.

Der MAC 22 ist in der ersten Logikeinheit 11 integriert, die interne Schnittstelle dazwischen ist nicht zugänglich. Die Kommunikation findet zwischen dem MAC 22 und der externen Buskopplung 50 statt und wird vom MAC 22 und nicht von der ersten Logikeinheit 11 kontrolliert. Das ist z.B. der Fall, wenn ein Ethernet- oder CAN-Controller in der ersten Logikeinheit 11 integriert ist. Die Buskopplung 50 kann somit als Ethernet-PHY bzw. CAN-Treiber realisiert sein. Da die Kommunikation zwischen dem MAC 22 und der Buskopplung 50 nicht unmittelbar von der ersten Logikeinheit 11 bestimmt wird, kann das anhand der Figuren 1 und 2 beschriebene Verfahren nicht angewendet werden, ohne die normale Datenübertragung zu stören.

Gemäß Figur 3 wird die Versorgungsspannung VDD der externen Buskopplung 50 (ein PHY oder ein Treiber) mittels zweier Schalter 42, 53 unterbrochen. Die zwei Schalter 42, 53 können z.B. als MOS-Transistoren implementiert sein. Für die kurze Testdauer wird die Versorgung der Buskopplung 50 über einen entsprechend dimensionierten Kondensator 55 gepuffert, so dass eine gegebenenfalls laufende Kommunikation nicht beeinflusst wird. Ein Testverfahren mit Simulierung des Fehlerfalls für die externe Überwachungsschaltung 13 wird auch hier verwendet, jedoch nicht mit der normalen Datenkommunikation synchronisiert. Der Schalter 42 unterbricht die Spannungsversorgung, der weitere Schalter 53 trennt das Prüfsignal SP vom Pufferkondensator 55, damit der Pegel des Prüfsignals SP auf 0, etwa 0 Volt, sinken kann. Jeder Fehler inklusive ein Fehler an den beiden Schaltern 42, 53 wird dadurch sicher erkannt. Das Prüfsignal SP liegt an der Rückkopplungsleitung 27 an. Falls auch der Ethernet-PHY 50 in der ersten Logikeinheit 11 integriert ist, kann die gleiche Methode für den Ethernet-Übertrager, in ähnlicher Weise, angewendet werden.

Der Busteilnehmer 10 gemäß Figur 3 weist als Datenübertragungsart ein Media Independent Interface, abgekürzt MII, im Falle von Ethernet auf. Zur Realisierung der sicheren Datensperrung wird eine Trennung direkt an der Buskopplung 50 (PHY, Übertrager) realisiert, wenn zwischen der ersten Logikeinheit 11 (als Mikrocontroller realisiert) und dem MAC 22 nicht zugegriffen werden kann und die Kommunikation nicht von der ersten Logikeinheit 11 sondern vom MAC 22 gesteuert wird. Während des Tests wird die Buskopplung 50 weiter über den Kondensator 55 versorgt. Die Buskopplung 50 kann als Buskoppler bezeichnet werden.

Die in den Figuren 1 bis 3 gezeigte Aufgabenverteilung zwischen den Logikeinheiten 11, 12 - die erste Logikeinheit 11 führt die Kommunikation durch und die zweite Logikeinheit 12 führt den Test durch - ist ausschließlich ein Beispiel.

In nicht gezeigten Ausführungsformen, die alternative Ausführungsformen zu den Beispielen in den Figuren 1 bis 3 sind, erzeugt die erste Logikeinheit 11 das erste und/oder zweite Testsignal ST1, ST2.

Figur 4 zeigt eine beispielhafte Ausführungsform der Überwachungsschaltung 13, die eine Weiterbildung der in den Figuren 1 bis 3 gezeigten Ausführungsform ist. Die Überwachungsschaltung 13 ist als Fensterkomparator 60 realisiert. Der Fensterkomparator 60 weist einen ersten und einen zweiten Komparator 61, 62 auf, die an einem ersten Eingang mit dem Versorgungsspannungsanschluss 15 gekoppelt sind. Ein zweiter Eingang des ersten Komparators 61 ist mit einem ersten Referenzspannungsanschluss 63 gekoppelt. Entsprechend ist ein zweiter Eingang des zweiten Komparators 62 mit einem zweiten Referenzspannungsanschluss 64 gekoppelt. Der erste Eingang des ersten Komparators 61 kann als nicht-invertierter Eingang und der zweite Eingang kann als invertierender Eingang realisiert sein. Der erste Eingang des zweiten Komparators 62 kann als invertierender Eingang und der zweite Eingang als nicht-invertierender Eingang ausgebildet sein. Ferner umfasst der Fensterkomparator 60 eine Logikgatterschaltung 65, die eingangsseitig mit dem ersten und dem zweiten Komparator 61, 62 und ausgangsseitig mit dem Steuerausgang 24 der Überwachungsschaltung 13 gekoppelt ist. Die Logikgatterschaltung 65 kann z.B. eine ODER-Funktion aufweisen.

Am ersten Referenzspannungsanschluss 63 kann die maximal zulässige Versorgungsspannung VMAX oder einen Wert, der diese Spannung repräsentiert, angelegt werden. Am zweiten Referenzspannungsanschluss 64 kann die minimal zulässige Versorgungsspannung VMIN oder ein Wert, der diese Spannung repräsentiert, angelegt werden. Der erste Komparator 61 detektiert, ob die Versorgungsspannung VDD größer als die maximal zulässige Versorgungsspannung VMAX ist. Entsprechend detektiert der zweite Komparator 62, ob die Versorgungsspannung VDD kleiner als die minimal zulässige Versorgungsspannung VMIN ist. Detektiert der erste Komparator 61, dass die Versorgungsspannung VDD größer als die maximal zulässigen Versorgungsspannung VMAX ist, oder detektiert der zweite Komparator 62, dass die Versorgungsspannung VDD kleiner als die minimal zulässige Versorgungsspannung VMIN ist, so bildet der Fensterkomparator 60 das Fehlersignal SU mit einem den Fehlerfall repräsentierenden Wert, nämlich mit dem ersten logischen Wert, z.B. 1. Das erste und das zweite Testsignal ST1, ST2 werden der Überwachungsschaltung 13 derart zugeleitet, dass auch bei einer Versorgungsspannung VDD mit einem Wert im zulässigen Bereich das Überwachungssignal SU mit einem den Fehlerfall repräsentierenden Wert erzeugt wird.

Figur 5 zeigt eine weitere beispielhafte Ausführungsform des Busteilnehmers 10, die eine Weiterbildung der in obigen Figuren gezeigten Ausführungsformen ist. Ein Ausgang der ersten Logikeinheit 11 ist über eine weitere erste Testleitung 16’ mit einem weiteren ersten Steuereingang der Überwachungsschaltung 13 verbunden. Die erste Logikeinheit 11 kann auch über eine weitere zweite Testleitung 17’ mit einem weiteren zweiten Steuereingang der Überwachungsschaltung 13 verbunden sein.

Die zweite Logikeinheit 12 ist über eine weitere Steuerleitung 70 mit der Übermittlungseinheit 14 verbunden. Die weitere Steuerleitung 70 koppelt die zweite Logikeinheit 12 mit der Logikschaltung 23. Die zweite Logikeinheit 12 gibt ein Sperrsignal SU’ an die Übermittlungseinheit 14 ab. Die Wirkung des Sperrsignals SU’ kann wie die Wirkung des Überwachungssignals SU sein. Das Sperrsignal SU’ kann die Kommunikation über die Übermittlungseinheit 14 etwa in der Testphase und bei einem an der ersten Logikeinheit 11 festgestellten Fehler unterbrechen.

Die Überwachungsschaltung 13 ist extern zur ersten und zur zweiten Logikeinheit 11, 12 implementiert. Die Überwachungsschaltung 13 kann z.B. getrennt von der ersten und der zweiten Logikeinheit 11, 12 realisiert sein. Die erste und die zweite Logikeinheit 11, 12 überwachen sich gegenseitig und sperren bei entdecktem Fehler die Kommunikation. Die erste Logikeinheit 11 kann die Kommunikation direkt sperren. Die zweite Logikeinheit 12 kann die Kommunikation über das Sperrsignal SU’ sperren.

In der Testphase gibt die erste Logikeinheit 11 über die weitere erste Testleitung 16’ ein weiteres erstes Testsignal ST1’ an die Überwachungsschaltung 13 ab. Damit triggert die erste Logikeinheit 11 einen ersten Test in der Überwachungsschaltung 13. Der erste Test kann wie oben beschrieben (z.B. wie anhand der Figur 1 erläutert) durchgeführt werden. Im ersten Test wird eine Unterspannung der Versorgungsspannung VDD simuliert. In der Überwachungsschaltung 13 werden das weitere erste Testsignal ST1’ und das erste Testsignal ST1 mit einer logischen Oder-Schaltung verknüpft.

In einem weiteren Abschnitt der Testphase kann die erste Logikeinheit 11 über die weitere zweite Testleitung 17’ ein weiteres zweites Testsignal ST2’ an die Überwachungsschaltung 13 abgeben. Somit kann die erste Logikeinheit 11 einen zweiten Test in der Überwachungsschaltung 13 auslösen. Der zweite Test kann wie oben beschrieben (z.B. wie anhand der Figur 1 erläutert) realisiert werden. Im zweiten Test wird eine Überspannung der Versorgungsspannung VDD simuliert. In der Überwachungsschaltung 13 werden das weitere zweite Testsignal ST2’ und das zweite Testsignal ST2 mit einer logischen Oder-Schaltung verknüpft.

In einer alternativen, nicht gezeigten Ausführungsform können die erste und die zweite Testleitung 16, 17 weggelassen sein. Die weitere erste und die weitere zweite Testleitung 16’, 17’ übernehmen somit die Funktion der ersten und der zweiten Testleitung 16, 17.

Das weitere erste und das weitere zweite Testsignal ST1', ST2' haben die Wirkung des ersten und des zweiten Testsignals ST1, ST2.

Auch die in den Figuren 2 und 3 gezeigten Ausführungsformen des Busteilnehmers 10 können optional die weitere erste Testleitung 16' und/oder die weitere zweite Testleitung 17' und/oder die weitere Steuerleitung 70 aufweisen.

Der Busteilnehmer 10 gemäß Figuren 1 und 5 hat als Datenübertragungsart einen parallelen Adressen/Daten-Bus (SWR ist das zugehörige Write-Signal). Zur Realisierung der sicheren Datensperrung wird eine Trennung auf der Ebene des Write-Signals des parallelen Adressen/Daten-Busses zwischen der ersten Logikeinheit 11 (als Mikrocontroller realisiert) und dem MAC 22 (ASIC) über das Gatter 23 durchgeführt.

Figur 6 zeigt eine beispielhafte Ausführungsform der Überwachungsschaltung 13, die eine Weiterbildung der in Figur 4 gezeigten Ausführungsform ist. Die Überwachungsschaltung 13 gemäß Figur 6 kann in einer der Ausführungsformen des Busteilnehmers 10 gemäß den Figuren 1, 2, 3 und 5 verwendet werden. Die Überwachungsschaltung 13 umfasst den Fensterkomparator 60 mit dem ersten und dem zweiten Komparator 61, 62. Weiter umfasst die Überwachungsschaltung 13 einen Referenzspannungsgenerator 71. Der Referenzspannungsgenerator 71 weist eine Zenerdiode 72 auf. Ein Anschluss der Zenerdiode 72 ist mit einem ersten Eingang des ersten Komparators 61 gekoppelt. Ein Kopplungswiderstand 73 kann zwischen dem Anschluss der Zenerdiode 72 und dem ersten Eingang des ersten Komparators 61 angeordnet sein. Der Kopplungswiderstand 73 ermöglicht eine Hysterese des Umschaltens des ersten Komparators 61. Der erste Eingang des ersten Komparators 61 ist als nicht-invertierende Eingang und der zweite Eingang des ersten Komparators 61 ist als invertierender Eingang realisiert. Die Zenerdiode 72 ist an einem weiteren Anschluss mit dem Bezugspotentialanschluss 44 verbunden.

Der zweite Komparator 62 weist einen ersten und einen zweiten Eingang auf. Der erste Eingang kann als nicht-invertierender Eingang und der zweite Eingang als invertierender Eingang realisiert sein. Der Anschluss der Zenerdiode 72 ist mit dem zweiten Eingang des zweiten Komparators 62 verbunden.

Zusätzlich weist die Überwachungsschaltung 13 einen Vorschaltwiderstand 74 auf, der seriell zur Zenerdiode 72 geschaltet ist. Eine Serienschaltung, umfassend den Vorschaltwiderstand 74 und die Zenerdiode 72, koppelt den weiteren Versorgungsspannungsanschluss 18 mit dem Bezugspotentialanschluss 44.

Weiter umfasst die Überwachungsschaltung 13 einen ersten Spannungsteiler 76, der den Versorgungsspannungsanschluss 15 mit dem Bezugspotentialanschluss 44 koppelt. Der erste Spannungsteiler 76 weist einen ersten und einen zweiten Spannungsteilerwiderstand 78, 79 auf. Ein erster Spannungsteilerabgriff 80 zwischen dem ersten und dem zweiten Spannungsteilerwiderstand 78, 79 ist mit dem zweiten Eingang des ersten Komparators 61 verbunden. Zusätzlich umfasst die Überwachungsschaltung 13 einen zweiten Spannungsteiler 81, der den Spannungsversorgungsanschluss 15 mit dem Bezugspotentialanschluss 44 koppelt. Der zweite Spannungsteiler 81 umfasst einen dritten und einen vierten Spannungsteilerwiderstand 82, 83 sowie einen zweiten Spannungsteilerabgriff 84 zwischen dem dritten und dem vierten Spannungsteilerwiderstand 82, 83. Der zweite Spannungsteilerabgriff 84 ist an den ersten Eingang des zweiten Komparators 62 angeschlossen.

Der erste Eingang des ersten Komparators 61 ist über einen ersten Rückkoppelwiderstand 85 mit dem Ausgang des ersten Komparators 61 verbunden. Der erste Eingang des zweiten Komparators 62 ist über einen zweiten Rückkoppelwiderstand 86 mit dem Ausgang des zweiten Komparators 62 verbunden. Mittels des ersten und des zweiten Rückkoppelwiderstands 85, 86 kann eine Hysterese des ersten und des zweiten Komparators 61, 62 eingestellt werden.

Der Ausgang des ersten Komparators 61 und der Ausgang des zweiten Komparators 62 sind mit dem Steuerausgang 24 der Überwachungsschaltung 13 gekoppelt. Dazu sind der Ausgang des ersten Komparators 61 und der Ausgang des zweiten Komparators 62 direkt an den Steuerausgang 24 angeschlossen. Der Steuerausgang 24 ist über einen Widerstand 97 mit einem Versorgungsanschluss 98 gekoppelt.

Zusätzlich weist die Überwachungsschaltung 13 eine erste Testschaltung 87 auf, die mit dem ersten Spannungsteiler 76 verbunden ist. Die erste Testschaltung 87 umfasst einen ersten Schalter 88, dessen gesteuerte Strecke zwischen dem Spannungsversorgungsanschluss 15 und dem ersten Spannungsteilerabgriff 80 angeordnet ist. Der erste Schalter 88 ist als Bipolartransistor realisiert. Damit sind der Emitter und der Kollektor des Bipolartransistors mit dem Spannungsversorgungsanschluss 15 beziehungsweise dem ersten Spannungsteilerabgriff 80 gekoppelt. Der erste Schalter 88 ist über einen Vorschaltwiderstand 89 an den ersten Spannungsteilerabgriff 80 angeschlossen. Der Bipolartransistor kann als PNP-Bipolartransistor realisiert sein. Die zweite Testleitung 17 ist über den zweiten Steuereingang der Überwachungsschaltung 13 und einen ersten Ansteuerwiderstand 90 der ersten Testschaltung 87 mit einem Steuereingang des ersten Schalters 88 gekoppelt. Damit koppelt der erste Ansteuerwiderstand 90 die zweiten Testleitung 17 mit der Basis des Bipolartransistors.

Alternativ kann der erste Schalter 88 als Metal-Oxide-Semiconductor Transistor, abgekürzt MOS-Transistor, realisiert sein. Der erste Schalter 88 kann etwa als p-Kanal MOS-Transistor implementiert sein. Der erste Ansteuerwiderstand 90 kann dabei entfallen und durch eine Leitung ersetzt sein.

Weiter umfasst die Überwachungsschaltung 13 eine zweite Testschaltung 91, die mit dem zweiten Spannungsteiler 81 gekoppelt ist. Die zweite Testschaltung 91 koppelt den zweiten Spannungsteilerabgriff 84 mit dem Bezugspotentialanschluss 44. Die zweite Testschaltung 91 umfasst einen zweiten Schalter 92. Eine gesteuerte Strecke des zweiten Schalters 92 ist zwischen dem zweiten Spannungsteilerabgriff 84 und dem Bezugspotentialanschluss 44 angeordnet. Der zweite Schalter 92 ist als Bipolartransistor realisiert. Ein Emitter und ein Kollektor des Bipolartransistors sind mit dem zweiten Spannungsteilerabgriff 84 beziehungsweise dem Bezugspotentialanschluss 44 gekoppelt. Der Bipolartransistor kann als NPN-Bipolartransistor realisiert sein. Ein zweiter Vorschaltwiderstand 93 verbindet den zweiten Schalter 92 mit dem zweiten Spannungsteilerabgriff 84. Die erste Testleitung 16 ist über den ersten Steuereingang der Überwachungsschaltung 13 und einen zweiten Ansteuerwiderstand 94 der zweiten Testschaltung 91 mit einem Steuereingang des zweiten Schalters 92 gekoppelt.

Alternativ kann der zweite Schalter 92 als MOS-Transistor realisiert sein. Der zweite Schalter 92 kann z. B. als p-Kanal MOS-Transistor implementiert sein. Der zweite Ansteuerwiderstand 94 kann dabei entfallen und durch eine Leitung ersetzt sein.

Optional kann der weitere zweite Steuereingang der Überwachungsschaltung 13 mit dem Steuereingang des ersten Schalters 88 gekoppelt sein. Dazu kann die Überwachungsschaltung 13 ein erstes Logikgatter 95 aufweisen, welcher den weiteren zweiten Steuereingang und den zweiten Steuereingang der Überwachungsschaltung 13 über den Ansteuerwiderstand 90 mit dem Steuereingang des ersten Schalters 88 koppelt. Somit ist die in Figur 5 gezeigte weitere zweite Testleitung 17' an die erste Testschaltung 87 angeschlossen. Das erste Logikgatter 95 realisiert eine ODER-Funktion. Das erste Logikgatter 95 kann z.B. als OR oder NOR Gatter realisiert sein.

Optional kann der weitere erste Steuereingang der Überwachungsschaltung 13 mit dem Steuereingang des zweiten Schalters 92 gekoppelt sein. Dazu kann die Überwachungsschaltung 13 ein zweites Logikgatter 96 aufweisen, die den weiteren ersten Steuereingang und den ersten Steuereingang der Überwachungsschaltung 13 mit dem Steueranschluss des zweiten Schalters 92 koppelt. Somit ist die weitere erste Testleitung 16' an die zweite Testschaltung 91 angeschlossen. Das zweite Logikgatter 96 realisiert eine ODER-Funktion. Das zweite Logikgatter 96 kann als OR oder NOR Gatter realisiert sein.

Der Referenzspannungsgenerator 71 erzeugt eine Referenzspannung VREF. Die Referenzspannung VREF fällt über der Zenerdiode 72 ab. Die Referenzspannung VREF wird dem ersten Eingang des ersten Komparators 61 und dem zweiten Eingang des zweiten Komparators 62 zugeleitet. Am Spannungsversorgungsanschluss 15 liegt die Versorgungsspannung VDD an. Am ersten Spannungsteilerabgriff 80 ist eine erste Ausgangsspannung VPL vorhanden, die dem zweiten Eingang des ersten Komparators 61 zugeleitet wird.

Der erste Komparator 61 vergleicht die erste Ausgangsspannung VPL mit der am ersten Eingang des ersten Komparators 61 anliegenden Spannung. Diese Spannung kann gleich der Referenzspannung VREF sein. Je nach Wahl der Widerstandswerte des Kopplungswiderstands 73 und des ersten Rückkoppelwiderstands 85 kann die am ersten Eingang des ersten Komparators 61 anliegende Spannung geringfügig von der Referenzspannung VREF abweichen. Der Kopplungswiderstand 73 und der erste Rückkoppelwiderstand 85 bestimmen die Hysterese des ersten Komparators 61. Der Ausgang des ersten Komparators 61 wird auf "high" geschaltet, solange die erste Ausgangsspannung VPL kleiner als die Referenzspannung VREF ist. Entsprechend ist der Ausgang des ersten Komparators 61 auf "low" geschaltet, wenn die Referenzspannung VREF kleiner als die erste Ausgangsspannung VPL ist. Der erste Komparator 61 dient der Überspannungsdetektion.

Der erste Komparator 61 gibt somit das Signal "high" ab, solange sich die Versorgungsspannung VDD unter der maximalen zulässigen Versorgungsspannung VMAX befindet. Dabei hat die maximal zulässige Versorgungsspannung VMAX einen Wert gemäß folgender Gleichung:

$$VMAX = VREF\ (R1 + R2) / R2,$$

wobei R1 ein Widerstandswert des ersten Spannungsteilerwiderstands 78, R2 ein Widerstandswert des zweiten Spannungswiderstands 79 und VREF ein Spannungswert der Referenzspannung ist.

Entsprechend ist an dem zweiten Spannungsteilerabgriff 84 eine zweite Ausgangsspannung VMI vorhanden, die dem ersten Eingang des zweiten Komparators 62 zugeführt wird. Weiter vergleicht der zweite Komparator 62 die zweite Ausgangsspannung VMI mit der Referenzspannung VREF. Entsprechend gibt der zweite Komparator 62 an seinem Ausgang das Signal "high" ab, wenn die zweite Ausgangsspannung VMI größer als die Referenzspannung VREF ist. Der zweite Komparator 62 gibt an seinem Ausgang das Signal "low" ab, wenn die zweite Ausgangsspannung VMI kleiner als die Referenzspannung VREF ist. Der zweite Komparator 62 stellt ausgangsseitig das Signal "high" bereit, wenn die Versorgungsspannung VDD größer als die minimal zulässige Versorgungsspannung VMIN ist. Der Wert der minimal zulässigen Versorgungsspannung VMIN kann gemäß folgender Gleichung berechnet werden:

$$VMIN = VREF\ (R3 + R4) / R4,$$

dabei ist R3 ein Widerstandswert des dritten Spannungsteilerwiderstands 82 und R4 ein Widerstandswert des vierten Spannungsteilerwiderstands 83. Der zweite Komparator 62 dient der Unterspannungsdetektion.

Befindet sich die Versorgungsspannung VDD somit in einem zulässigen Bereich, so geben sowohl der erste wie auch der zweite Komparator 61, 62 das Signal "high" ab. Am Signalausgang 24 liegt das Überwachungssignal SU an. Das Überwachungssignal SU hat somit den Wert "high", solange die Versorgungsspannung VDD im zulässigen Spannungsbereich ist. Der zulässige Spannungsbereich für die Versorgungsspannung VDD ist definiert als: VMIN < VDD < VMAX

Ist die Versorgungsspannung VDD unter der minimal zulässigen Versorgungsspannung VMIN, so gibt der zweite Komparator 62 das Signal "low" ab, sodass das Überwachungssignal SU ebenfalls den Wert "low" annimmt. Entsprechend gilt: Steigt die Versorgungsspannung VDD über die maximal zulässige Versorgungsspannung VMAX, so gibt der erste Vergleicher 61 das Signal "low" ab, sodass das Überwachungssignal SU ebenfalls den Wert "low" annimmt. Der Wert "low" entspricht ungefähr 0 V. Der Wert "high" entspricht einem von 0 V verschiedenen Spannungswert. Der Wert "high" kann etwa dem Spannungswert einer Versorgungspannung VT, die dem Versorgungsanschluss 98 zugeleitet wird, entsprechen. Der Wert "low" kann auch als erster logischer Wert oder als Wert "0" und der Wert "high" als zweiter logischer Wert oder als Wert "1" bezeichnet werden.

Der erste und der zweite Komparator 61, 62 weisen Open-Kollektor-Ausgänge auf. Dabei sind bei einem Wert "low" diese Ausgänge mit einem Massepotential verbunden und bei einem Wert "high" ist die Verbindung des Ausgangs zum Massepotential unterbrochen. Der Widerstand 97 ist als Pull-Up-Widerstand realisiert. Die Spannung VT, die am Versorgungsanschluss 98 anliegt, kann der Versorgungsspannung VDD oder der weiteren Versorgungsspannung VS entsprechen. Dazu ist der Versorgungsanschluss 98 entweder mit dem Versorgungsspannungsanschluss 15 oder dem weiteren Versorgungsspannungsanschluss 18 verbunden.

Das erste Testsignal ST1 wird der zweiten Testschaltung 91 zugeführt. In der Testphase schaltet das erste Testsignal ST1 den zweiten Schalter 92 in einen leitenden Zustand. Das erste Testsignal ST1 führt zu einer Veränderung der zweiten Ausgangsspannung VMI. Dabei wird durch das erste Testsignal ST1 die zweite Ausgangsspannung VMI reduziert, sodass der Wert "low" am Ausgang des zweiten Komparators 62 abgegriffen wird. Die vom zweiten Spannungsteiler 81 bereitgestellte zweite Ausgangsspannung VMI wird dadurch verändert, dass in der Testphase ein parallel zum vierten Spannungsteilerwiderstand 83 angeordneter Strompfad leitend geschaltet wird. Da der zweite Schalter 92 durchgeschaltet ist, ist der Vorschaltwiderstand 93 parallel zum vierten Spannungsteilerwiderstand 83 geschaltet.

Entsprechend kann das weitere erste Testsignal ST1' der zweiten Testschaltung 91 zugeleitet werden. In der Testphase setzt das weitere erste Testsignal ST1' den zweiten Schalter 92 in einen leitenden Zustand, so dass die zweite Ausgangsspannung VMI reduziert wird. Somit wird durch das erste und/oder das weitere erste Testsignal ST1, ST1' eine Unterspannung der Versorgungsspannung VDD simuliert.

Das zweite Testsignal ST2 wird der ersten Testschaltung 87 zugeleitet. In dem weiteren Abschnitt der Testphase setzt das zweite Testsignal ST2 den ersten Schalter 88 in einen leitenden Zustand. In dem weiteren Abschnitt der Testphase verändert das zweite Testsignal ST2 die erste Ausgangsspannung VPL. Dabei erhöht das zweite Testsignal ST2 die erste Ausgangsspannung VPL derart, dass der erste Komparator 61 den Wert "Low" am Ausgang bereitstellt. Damit signalisiert der erste Komparator 61 eine Überspannung, auch wenn die Versorgungsspannung VDD kleiner als die maximal zulässige Versorgungsspannung VMAX ist. Die vom ersten Spannungsteiler 76 bereitgestellte erste Ausgangsspannung VPL wird in dem weiteren Abschnitt der Testphase dadurch verändert, dass der parallel zum ersten Spannungsteilerwiderstand 78 angeordnete Strompfad leitend geschaltet wird. Da der erste Schalter 88 durchgeschaltet ist, ist der Vorschaltwiderstand 89 parallel zum ersten Spannungsteilerwiderstand 78 geschaltet.

Das weitere zweite Testsignal ST2' wird ebenfalls der ersten Testschaltung 87 zugeleitet. In dem weiteren Abschnitt der Testphase schaltet das weitere zweite Testsignal ST2' den ersten Schalter 88 in einen leitenden Zustand. Auch das weitere zweite Testsignal ST2' führt zu einer Erhöhung der ersten Ausgangsspannung VPL und damit zu einem Wert "low" des Ausgangssignals des ersten Komparators 61. Somit wird durch das zweite und/oder das weitere zweite Testsignal ST2, ST2' eine Überspannung der Versorgungsspannung VDD simuliert.

Mit Vorteil können durch die Veränderung des ersten und des zweiten Spannungsteilers 76, 81 eine Unterspannung und/oder eine Überspannung simuliert werden. Somit kann eine Überspannung und/oder eine Unterspannung simuliert werden, auch wenn die zu überwachende Versorgungsspannung VDD zwischen den Grenzwerten VMIN, VMAX liegt.

Das Überwachungssignal SU ergibt sich aus einer ODER-Verknüpfung des Ausgangssignals des ersten Komparators 61 und des Ausgangssignals des zweiten Komparators 62. Zeigt einer der beiden Komparatoren 61, 62 einen Fehlerfall an, so zeigt das Überwachungssignal SU ebenfalls den Fehlerfall an. Zeigt der erste Komparator 61 eine Überspannung oder der zweite Komparator 62 eine Unterspannung an, so weist das Überwachungssignal SU einen den Fehlerfall signalisierenden logischen Wert auf.

Die Zenerdiode 72 stellt die Referenzspannung VREF mit hoher Genauigkeit mit einem vorgegebenen Wert bereit, auch wenn die weitere Versorgungsspannung VS, die dem weiteren Versorgungsspannungsanschluss 18 zugeleitet wird, Schwankungen aufweist.

In einer alternativen, nicht gezeigten Ausführungsform umfasst die Überwachungsschaltung 13 einen Inverter, der dem Signalausgang 24 vorgeschaltet

ist. Die Ausgänge des ersten und des zweiten Komparators 61, 62 sind über den Inverter mit dem Signalausgang 24 gekoppelt. In diesem Fall hat das Überwachungssignal SU den Wert "high", sobald die Versorgungsspannung VDD außerhalb des zulässigen Spannungsbereichs ist und den Wert "low", sobald die Versorgungsspannung VDD innerhalb des zulässigen Versorgungsspannungsbereichs ist.

In einer alternativen, nicht gezeigten Ausführungsform sind die zweite und die weitere zweite Testleitung 17, 17', die erste Testschaltung 87 sowie das erste Logikgatter 95 weggelassen. Somit wird ausschließlich der Fall der Unterspannung simuliert. Der erste Komparator 61 kann auch entfallen.

In einer alternativen, nicht gezeigten Ausführungsform sind die erste Testleitung 16 oder die weitere erste Testleitung 16' weggelassen. Das zweite Logikgatter 96 ist durch eine Verbindung ersetzt.

In einer alternativen, nicht gezeigten Ausführungsform sind die zweite Testleitung 17 oder die weitere zweite Testleitung 17' weggelassen. Das erste Logikgatter 95 ist durch eine Verbindung ersetzt.

Bezugszeichenliste

| | |
|---|---|
| 10 | Busteilnehmer |
| 11 | erste Logikeinheit |
| 12 | zweite Logikeinheit |
| 13 | Überwachungsschaltung |
| 14 | Übermittlungseinheit |
| 15 | Versorgungsspannungsanschluss |
| 16, 16' | erste Testleitung |
| 17, 17' | zweite Testleitung |
| 18 | weiterer Versorgungsspannungsanschluss |
| 20 | Busanschluss |
| 21 | Bus |
| 22 | Medienzugriffssteuerung |
| 23 | Logikschaltung |
| 24 | Steuerausgang |
| 25 | Steuerleitung |
| 26 | Signaleingang |
| 27 | Rückkopplungsleitung |
| 28 | Signaleingang |
| 30 | weiterer Busanschluss |
| 31 | Busleitung |
| 40 | Sendeelement |
| 41 | Schalteranordnung |
| 42 | Schalter |
| 43 | Entladewiderstand |
| 44 | Bezugspotentialanschluss |
| 45 | Buseingang |
| 50 | Buskopplung |
| 51 | bidirektionale Verbindung |
| 53 | weiterer Schalter |
| 55 | Kondensator |
| 60 | Fensterkomparator |
| 61 | erster Komparator |
| 62 | zweiter Komparator |
| 63 | erster Referenzspannungsanschluss |
| 64 | zweiter Referenzspannungsanschluss |
| 65 | Logikgatterschaltung |
| 70 | weitere Steuerleitung |
| 71 | Referenzspannungsgenerator |
| 72 | Zenerdiode |
| 73 | Kopplungswiderstand |
| 74 | Vorschaltwiderstand |
| 76 | erster Spannungsteiler |
| 78 | erster Spannungsteilerwiderstand |
| 79 | zweiter Spannungsteilerwiderstand |
| 80 | erster Spannungsteilerabgriff |
| 81 | zweiter Spannungsteiler |
| 82 | dritter Spannungsteilerwiderstand |
| 83 | vierter Spannungsteilerwiderstand |
| 84 | zweiter Spannungsteilerabgriff |
| 85 | erste Rückkoppelwiderstand |
| 86 | zweiter Rückkoppelwiderstand |
| 87 | erste Testschaltung |
| 88 | erster Schalter |
| 89 | Vorschaltwiderstand |
| 90 | erster Ansteuerwiderstand |
| 91 | zweite Testschaltung |
| 92 | zweite Schalter |
| 93 | Vorschaltwiderstand |
| 94 | zweiter Ansteuerwiderstand |
| 95 | erstes Logikgatter |
| 96 | zweites Logikgatter |
| 97 | Widerstand |
| 98 | Versorgungsanschluss |
| SP | Prüfsignal |
| RX | Empfangssignal |
| ST1, ST1' | erstes Testsignal |
| ST2, ST2' | zweites Testsignal |
| SU | Überwachungssignal |
| SU' | Sperrsignal |
| SWR | Anschlusssignal |
| TX | Sendesignal |
| VDD | Versorgungsspannung |
| VMI | zweite Ausgangsspannung |
| VMIN | minimal zulässige Versorgungsspannung |
| VMAX | maximal zulässige Versorgungsspannung |
| VPL | erste Ausgangsspannung |
| VREF | Referenzspannung |
| VS | weitere Versorgungsspannung |
| VT | Versorgungsspannung |
| WRS | Bussignal |

**Patentansprüche**

**1.** Busteilnehmer, umfassend

- eine erste Logikeinheit (11), umfassend einen Busanschluss (20),

- eine zweite Logikeinheit (12),
- eine Überwachungsschaltung (13),
- eine Übermittlungseinheit (14),
- eine erste Testleitung (16), und
- eine Medienzugriffssteuerung (22),

wobei der Busteilnehmer (10) ausgelegt ist, dass in einer Kommunikationsphase die erste Logikeinheit (11) über die Übermittlungseinheit (14) und die Medienzugriffssteuerung (22) mit einem Bus (21) kommuniziert,
wobei der Busteilnehmer (10) ausgelegt ist, dass in einem Fehlerfall die Überwachungsschaltung (13) ein Überwachungssignal (SU) an die Übermittlungseinheit (14) derart abgibt, dass die Übermittlungseinheit (14) die Kommunikation sperrt,
wobei der Busteilnehmer (10) eine erste Testleitung (16) umfasst,
wobei die erste und/oder die zweite Logikeinheit (11, 12) über die erste Testleitung (16) mit der Überwachungsschaltung (13) zur Abgabe eines ersten Testsignals (ST1) an die Überwachungsschaltung (13) gekoppelt ist,
wobei der Busanschluss (20) über die Übermittlungseinheit (14) mit der Medienzugriffssteuerung (22) gekoppelt ist, und wobei die Medienzugriffssteuerung (22) an den Bus (21) angeschlossen ist.

**2.** Busteilnehmer nach Anspruch 1,
wobei die erste und/oder die zweite Logikeinheit (11, 12) ausgelegt ist, in einer Testphase zu testen, ob die Übermittlungseinheit (14) das Überwachungssignal (SU) erhält.

**3.** Busteilnehmer nach Anspruch 1 oder 2,
wobei die erste und/oder die zweite Logikeinheit (11, 12) ausgelegt ist, in der Testphase zu testen, ob die Übermittlungseinheit (14) nach Erhalt des Überwachungssignals (SU) die Kommunikation sperrt.

**4.** Busteilnehmer nach einem der Ansprüche 1 bis 3,
wobei die Überwachungsschaltung (13) ausgelegt ist, das Überwachungssignal (SU) bei einem Fehler aufgrund gemeinsamer Ursachen und/oder einem Ausfall aufgrund gemeinsamer Ursachen zu generieren.

**5.** Busteilnehmer nach Anspruch 4,
wobei als ein Ausfall aufgrund gemeinsamer Ursache ein Ausfall von der ersten und der zweiten Logikeinheit (11, 12) bezeichnet wird, der als Folge einer einzelnen Fehlerursache oder eines einzelnen Ereignisses auftritt.

**6.** Busteilnehmer nach einem der Ansprüche 1 bis 5,
wobei die Überwachungsschaltung (13) ausgelegt ist, das Überwachungssignal (SU) zu generieren, wenn sich eine Versorgungsspannung (VDD) der ersten und der zweiten Logikeinheit (11, 12) außerhalb eines vorgegebenen Bereichs befindet.

**7.** Busteilnehmer nach einem der Ansprüche 1 bis 6,
wobei ein Steuerausgang (24) der Überwachungsschaltung (13) über eine Steuerleitung (25) des Busteilnehmers (10) mit der Übermittlungseinheit (14) zur Abgabe des Überwachungssignals (SU) an die Übermittlungseinheit (14) gekoppelt ist.

**8.** Busteilnehmer nach Anspruch 7,
wobei die Übermittlungseinheit (14) eine Schalteranordnung (41) umfasst, die steuerseitig an die Steuerleitung (25) angeschlossen ist.

**9.** Busteilnehmer nach einem der Ansprüche 1 bis 8,
wobei der Busanschluss (20) der ersten Logikeinheit (11) zur Abgabe eines Anschlusssignals (SWR) an die Übermittlungseinheit (14) ausgelegt ist.

**10.** Busteilnehmer nach einem der Ansprüche 1 bis 9,
wobei die Übermittlungseinheit (14) über eine Rückkopplungsleitung (27) des Busteilnehmers (10) mit einem Signaleingang (26) der zweiten Logikeinheit (12) und/oder mit einem Signaleingang (28) der ersten Logikeinheit (11) gekoppelt ist.

**11.** Verfahren zum Betreiben eines Busteilnehmers, umfassend

- Kommunizieren einer ersten Logikeinheit (11) in einer Kommunikationsphase über eine Übermittlungseinheit (14) und eine Medienzugriffssteuerung (22) mit einem Bus (21),
- im Fehlerfall Abgabe eines Überwachungssignals (SU) von einer Überwachungsschaltung (13) an die Übermittlungseinheit (14) derart, dass die Übermittlungseinheit (14) die Kommunikation sperrt, und
- in einer Testphase Abgabe eines ersten Testsignals (ST1) von der ersten

und/oder einer zweiten Logikeinheit (11, 12) über eine erste Testleitung (16) an die Überwachungsschaltung (13),
wobei der Busteilnehmer (10) die erste und die zweite Logikeinheit (11, 12), die Überwachungsschaltung (13), die Übermittlungseinheit (14) und die erste Testleitung (16) umfasst,
wobei ein Busanschluss (20) der ersten Logikeinheit (11) über die Übermittlungseinheit (14) mit der Medienzugriffssteuerung (22) gekoppelt ist, und wobei die Medienzugriffssteuerung (22) an den Bus (21) angeschlossen ist.

**12.** Verfahren nach Anspruch 11, wobei in der Testphase getestet wird, ob die Übermittlungseinheit (14) das Überwachungssignal (SU) von der Überwachungsschaltung (13) erhält.

## Claims

**1.** A bus node comprising

- a first logic unit (11), comprising a bus connection (20),
- a second logic unit (12),
- a monitoring circuit (13),
- a transmission unit (14),
- a first test line (16), and
- a media access controller (22),

wherein the bus node (10) is designed such that in a communication phase the first logic unit (11) communicates via the transmission unit (14) and the media access controller (22) with a bus (21),
wherein the bus node (10) is designed such that, in the event of a fault, the monitoring circuit (13) sends a monitoring signal (SU) to the transmission unit (14) such that the transmission unit (14) blocks communication,
wherein the bus node (10) comprises a first test line (16),
wherein the first and/or the second logic unit (11, 12) is/are coupled via the first test line (16) to the monitoring circuit (13) for outputting a first test signal (ST1) to the monitoring circuit (13),
wherein the bus connection (20) is coupled via the transmission unit (14) to the media access controller (22), and
wherein the media access controller (22) is connected to the bus (21).

**2.** Bus node according to Claim 1, wherein the first and/or the second logic unit (11, 12) is/are designed to test in a test phase whether the transmission unit (14) is receiving the monitoring signal (SU).

**3.** Bus node according to Claims 1 or 2, wherein the first and/or the second logic unit (11, 12) is/are designed to test in the test phase whether the transmission unit (14) blocks communication after receiving the monitoring signal (SU).

**4.** Bus node according to any one of Claims 1 to 3, wherein the monitoring circuit (13) is designed to generate the monitoring signal (SU) in the event of a fault due to common causes and/or a failure due to common causes.

**5.** Bus node according to Claim 4, wherein a failure of the first and second logic units (11, 12) is designated a failure due to a common cause that occurs as a result of a single cause of error or of an individual event.

**6.** Bus node according to any one of Claims 1 to 5, wherein the monitoring circuit (13) is designed to generate the monitoring signal (SU) when a supply voltage (VDD) of the first and second logic units (11, 12) is outside a prespecified range.

**7.** Bus node according to any one of Claims 1 to 6, wherein a control output (24) of the monitoring circuit (13) is coupled via a control line (25) of the bus node (10) to the transmission unit (14) for outputting the monitoring signal (SU) to the transmission unit (14).

**8.** Bus node according to Claim 7, wherein the transmission unit (14) comprises a switch assembly (41) which is connected to the control line (25) on the control side.

**9.** Bus node according to any one of Claims 1 to 8, wherein the bus connection (20) of the first logic unit (11) is designed to output a connection signal (SWR) to the transmission unit (14).

**10.** Bus node according to any one of Claims 1 to 9, wherein the transmission unit (14) is coupled via a feedback line (27) of the bus node (10) to a signal input (26) of the second logic unit (12) and/or to a signal input (28) of the first logic unit (11).

**11.** Method for operating a bus node, comprising:

- a first logic unit (11) communicating in a communication phase via a transmission unit (14) and a media access controller (22) with a bus (21),
- in the event of a fault, outputting a monitoring signal (SU) from a monitoring circuit (13) to the transmission unit (14) such that the transmission unit (14) blocks communication and,
- in a test phase, outputting a first test signal (ST1) from the first and/or a second logic unit (11, 12) via a first test line (16) to the monitoring circuit (13),

wherein the bus node (10) comprises the first and the second logic units (11, 12), the monitoring circuit (13), the transmission unit (14) and the first test line (16),

wherein a bus connection (20) of the first logic unit (11) is coupled via the transmission unit (14) to the media access controller (22), and wherein the media access controller (22) is connected to the bus (21).

**12.** Method according to Claim 11, wherein in the test phase, it is tested whether the transmission unit (14) is receiving the monitoring signal (SU) from the monitoring circuit (13).

**Revendications**

**1.** Utilisateur de bus, comprenant

- une première unité logique (11), comprenant une connexion de bus (20),
- une seconde unité logique (12),
- un circuit de surveillance (13),
- une unité de transmission (14),
- une première ligne de test (16) et
- une commande d'accès au support (22),

l'utilisateur de bus (10) étant conçu de manière à ce que dans une phase de communication la première unité logique (11) communique à travers
l'unité de transmission (14) et la commande d'accès au support (22) avec un bus (21),
l'utilisateur de bus (10) étant conçu de manière à ce que dans un cas d'erreur le circuit de surveillance (13) transmette un signal de surveillance (SU) à l'unité de transmission (14) de telle façon que l'unité de transmission (14) bloque la communication,
l'utilisateur de bus (10) comprenant une première ligne de test (16),
la première et/ou la seconde unité logique (11, 12) étant couplée à travers la première ligne de test (16) au circuit de surveillance (13) pour l'émission d'un premier signal de test (ST1) au circuit de surveillance (13),
la connexion de bus (20) étant couplée à travers l'unité de transmission (14) à la commande d'accès au support (22) et la commande d'accès au support (22) étant connectée au bus (21).

**2.** Utilisateur de bus selon la revendication 1, dans lequel la première et/ou la seconde unité logique (11, 12) est conçue de manière à tester, dans une phase de test, si l'unité de transmission (14) reçoit le signal de surveillance (SU).

**3.** Utilisateur de bus selon la revendication 1 ou 2, dans lequel la première et/ou la seconde unité logique (11, 12) est conçue de manière à tester, dans la phase de test, si l'unité de transmission (14) bloque la communication après la réception du signal de surveillance (SU).

**4.** Utilisateur de bus selon l'une quelconque des revendications 1 à 3, dans lequel le circuit de surveillance (13) est conçu de manière à générer le signal de surveillance (SU) en cas d'une erreur due à des causes communes et/ou d'une défaillance due à des causes communes.

**5.** Utilisateur de bus selon la revendication 4, dans lequel est désignée comme une défaillance due à une cause commune une défaillance de la première et de la seconde unité logique (11, 12) qui se produit à la suite d'une cause d'erreur unique ou d'un événement unique.

**6.** Utilisateur de bus selon l'une quelconque des revendications 1 à 5, dans lequel le circuit de surveillance (13) est conçu de manière à générer le signal de surveillance (SU) lorsqu'une tension d'alimentation (VDD) de la première et de la seconde unité logique (11, 12) se trouve en dehors d'une plage prédéfinie.

**7.** Utilisateur de bus selon l'une quelconque des revendications 1 à 6, dans lequel une sortie de commande (24) du circuit de surveillance (13) est couplée à travers une ligne de commande (25) de l'utilisateur de bus (10) à l'unité de transmission (14) pour l'émission du signal de surveillance (SU) à l'unité de transmission (14).

**8.** Utilisateur de bus selon la revendication 7, dans lequel l'unité de transmission (14) comprend un ensemble de commutateur (41), qui est connecté côté commande à la ligne de commande (25).

**9.** Utilisateur de bus selon l'une quelconque des revendications 1 à 8, dans lequel la connexion de bus (20) de la première unité logique (11) est conçue pour l'émission d'un signal de connexion (SWR) à l'unité de transmission (14).

**10.** Utilisateur de bus selon l'une quelconque des revendications 1 à 9, dans lequel l'unité de transmission (14) est couplée à travers une ligne de rétroaction (27) de l'utilisateur de bus (10) à une entrée de signal (26) de la seconde unité logique (12) et/ou à une entrée de signal (28) de la première unité logique (11).

**11.** Procédé pour faire fonctionner un utilisateur de bus, comprenant

- la communication d'une première unité logique (11), dans une phase de communication, à travers une unité de transmission (14) et une commande d'accès au support (22) avec un bus (21),
- l'émission, en cas d'erreur, d'un signal de surveillance (SU) à partir d'un circuit de surveillance (13) à l'unité de surveillance (14) de telle manière que l'unité de transmission (14) bloque la communication,
- et l'émission, dans une phase de test, d'un premier signal de test (ST1) à partir de la première et/ou d'une seconde unité logique (11, 12) à travers une première ligne de test (16) au circuit de surveillance (13),

l'utilisateur de bus (10) comprenant la première et la seconde unité logique (11, 12), le circuit de surveillance (13), l'unité de transmission (14) et la première ligne de test (16),
une connexion de bus (20) de la première unité logique (11) étant couplée à travers l'unité de transmission (14) à la commande d'accès au support (22) et la commande d'accès au support (22) étant connectée au bus (21).

**12.** Procédé selon la revendication 11,
dans lequel il est testé, dans la phase de test, si l'unité de transmission (14) reçoit le signal de surveillance (SU) du circuit de surveillance (13).

FIG 1

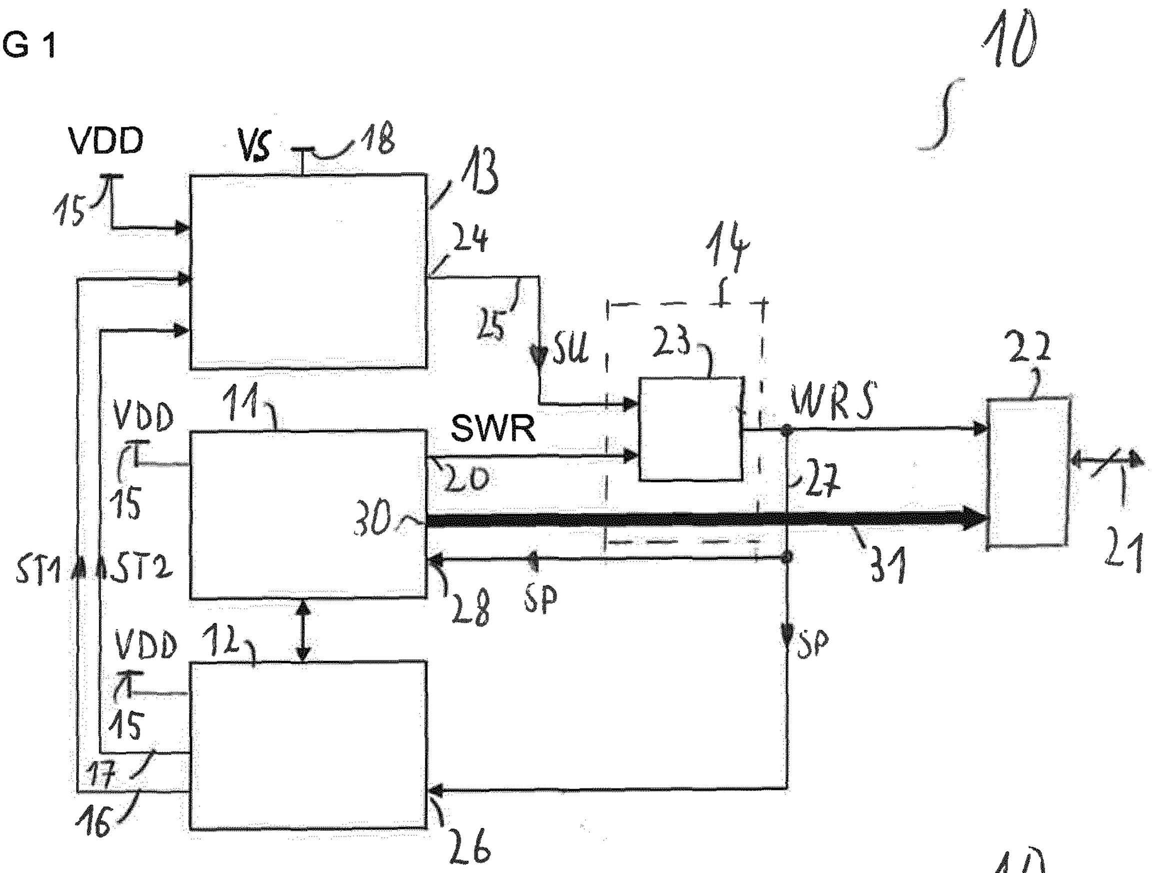
10
VDD
VS
18
13
15
24
14
25
SU
23
22
VDD
11
SWR
WRS
15
20
27
15
30
31
21
ST1
ST2
28
SP
VDD
12
SP
15
17
16
26

FIG 2

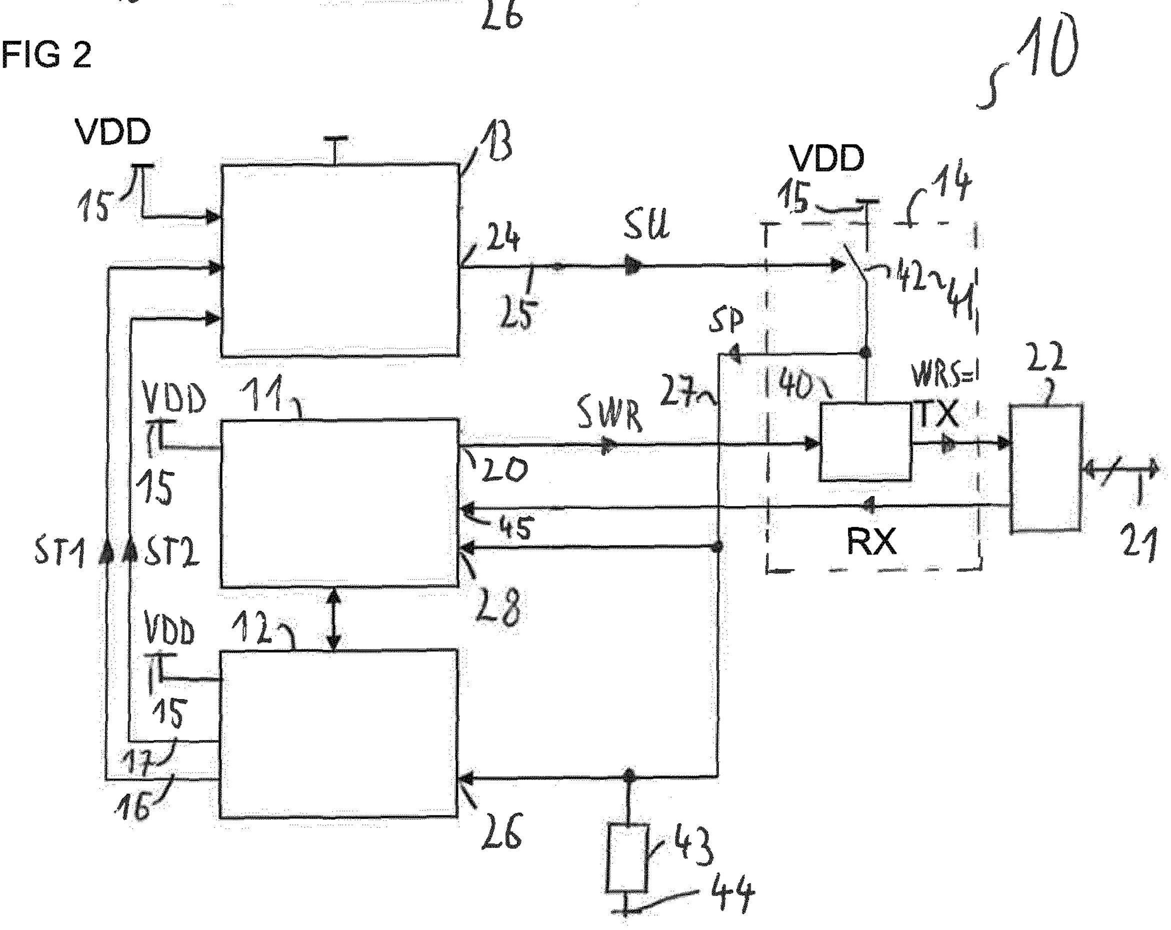
10
VDD
13
VDD
15
15
14
24
SU
25
42
41
SP
40
22
VDD
11
27
WRS=I
SWR
TX
15
20
45
ST1
ST2
RX
21
28
VDD
12
15
17
16
26
43
44

FIG 3

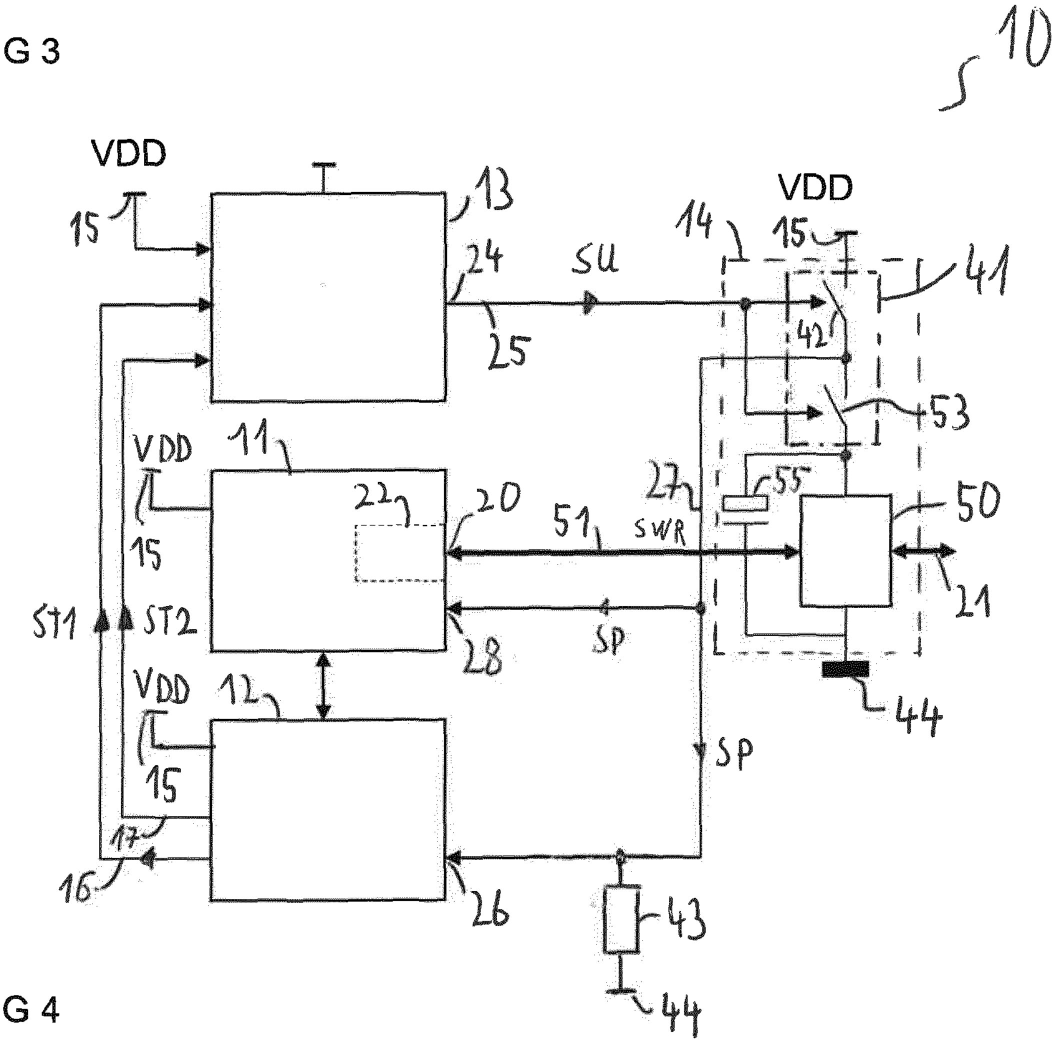
10
VDD
15
13
24
SU
25
14
VDD
15
41
42
53
11
VDD
15
22
20
51
SWR
27
55
50
21
ST1
ST2
28
SP
44
VDD
12
15
SP
17
16
26
43
44

FIG 4

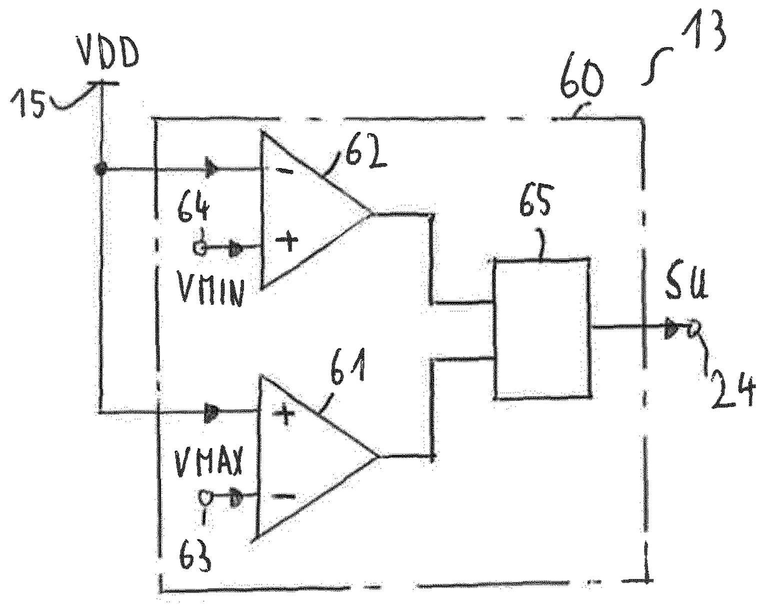
VDD
15
60
13
62
64
VMIN
65
SU
24
61
VMAX
63

FIG 5

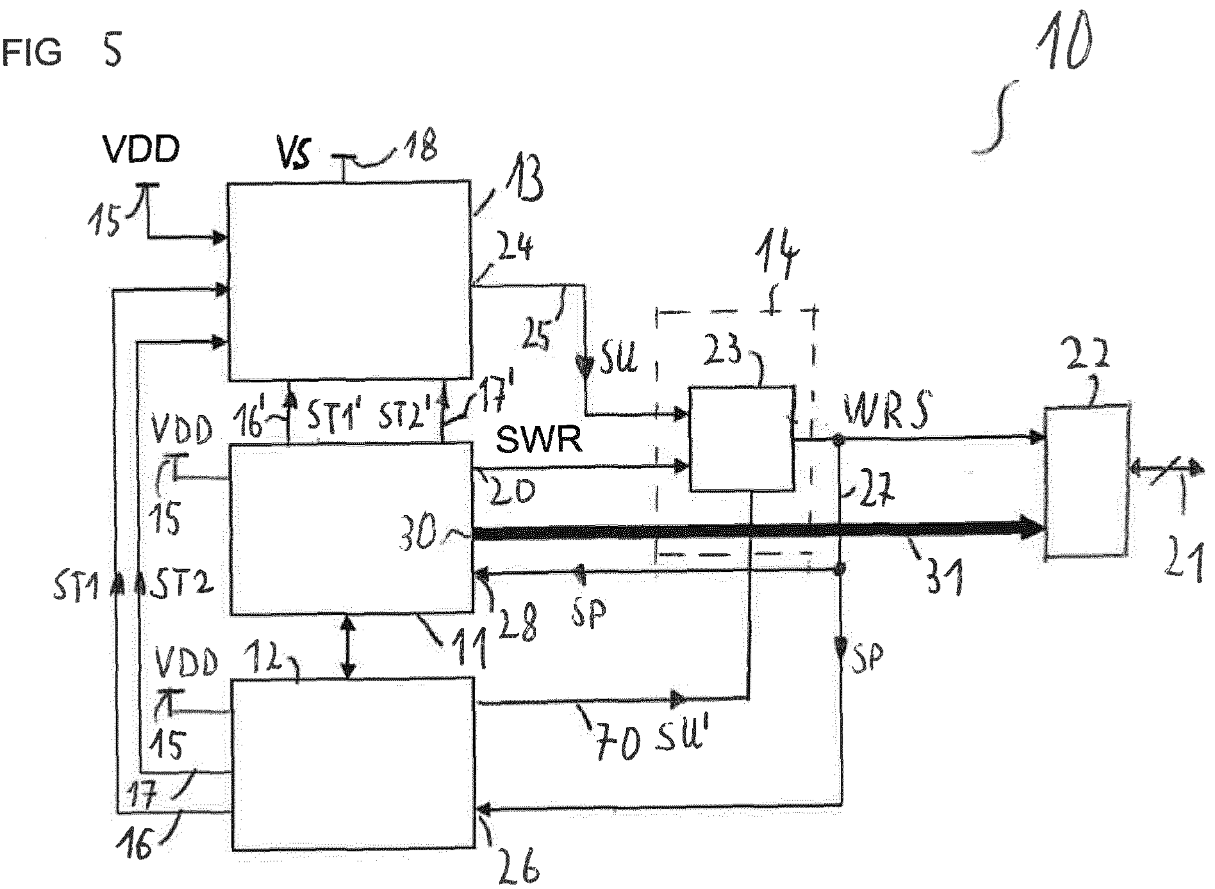
10
VDD
VS
18
13
15
24
14
25
SU
23
22
VDD
16'
ST1'
ST2'
17'
WRS
SWR
15
20
27
30
31
21
ST1
ST2
28
SP
11
VDD
12
SP
15
70
SU'
17
16
26

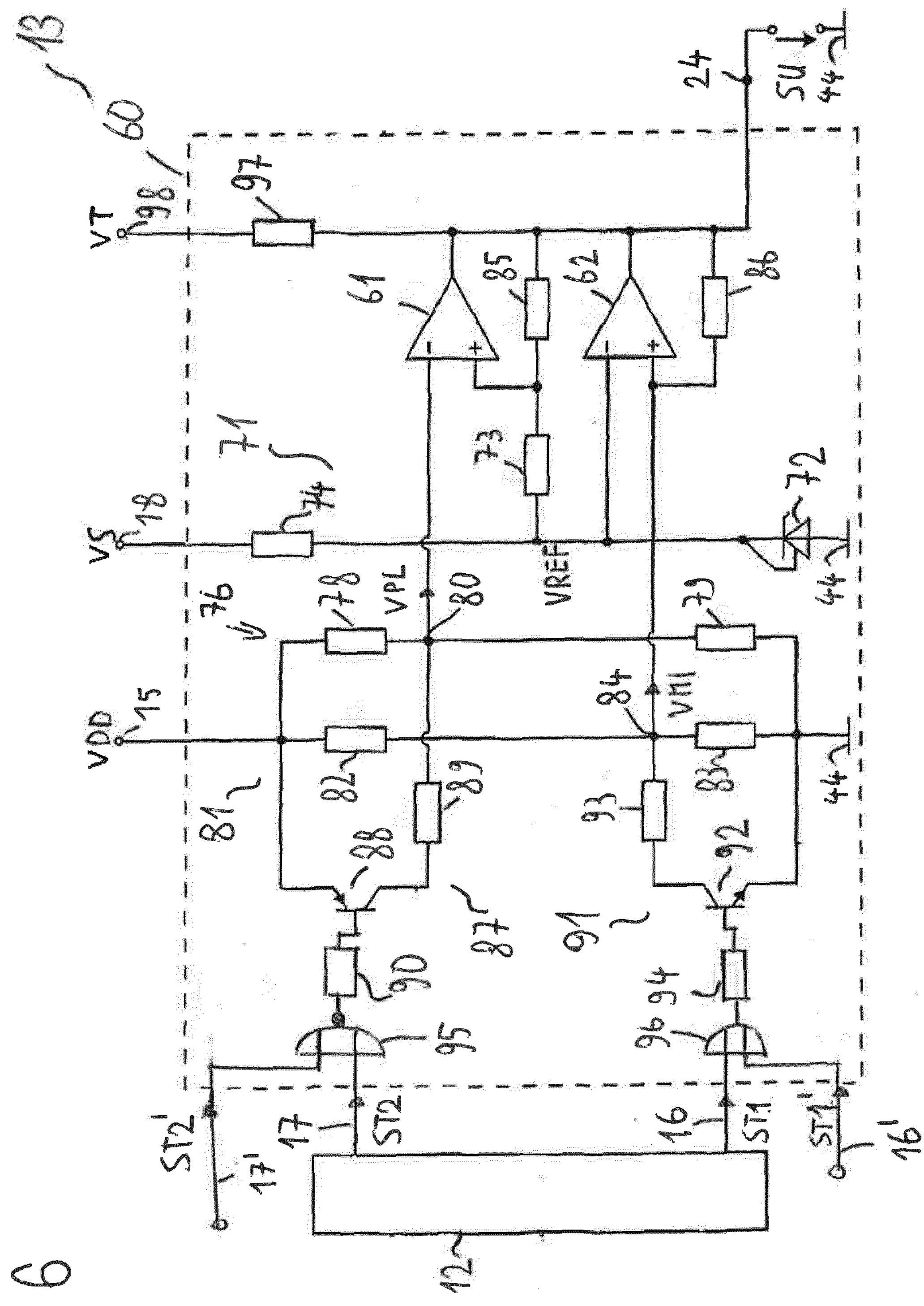
13
60
VT
98
97
24
SU
44
61
62
85
86
VS
18
74
71
73
72
VREF
VPL
80
78
79
76
VDD
15
84
VM1
81
82
83
89
93
88
92
87
91
90
94
95
96
ST2'
17'
17
ST2
16
ST1
ST1'
16'
12

FIG 6

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 2117094 A2
- US 20110128046 A1
- EP 2720051 A1